# EUROPEAN PATENT SPECIFICATION

(11) **EP 4 199 546 B1**
(45) Date of publication and mention of the grant of the patent: **08.10.2025**
(21) Application number: 21863554.8
(22) Date of filing: 26.08.2021
(51) Int. Cl.: H04W 4/02, H04W 4/80, H04W 12/03, H04W 12/106, H04W 12/72, H04W 64/00, H04W 88/04, H04W 92/18

(54) **ULTRA-WIDEBAND (UWB) POSITIONING METHOD FOR ELECTRONIC DEVICE, AND UWB TERMINAL DEVICE**
ULTRABREITBAND (UWB)-POSITIONIERUNGSVERFAHREN FÜR ELEKTRONISCHE VORRICHTUNG UND UWB-ENDGERÄTEVORRICHTUNG
PROCÉDÉ DE POSITIONNEMENT À BANDE ULTRA-LARGE (UWB) POUR DISPOSITIF ÉLECTRONIQUE, ET DISPOSITIF TERMINAL UWB

(30) Priority: 02.09.2020 CN 202010910853
(43) Date of publication of application: 21.06.2023
(73) Proprietor: Huawei Technologies Co., Ltd., Shenzhen, Guangdong 518129 (CN)
(72) Inventor: CHANG, Te-Chin, Shenzhen, Guangdong 518129 (CN); HUANG, Chengsheng, Shenzhen, Guangdong 518129 (CN); YANG, Yuxin, Shenzhen, Guangdong 518129 (CN); CHEN, ChiaHao, Shenzhen, Guangdong 518129 (CN)
(74) Representative: Pfenning, Meinig & Partner mbB
(86) International application number: PCT/CN2021/114738
(87) International publication number: WO 2022/048489

(56) References cited:
- EP-A2- 3 401 696
- WO-A1-2015/018452
- CN-A- 1 926 775
- CN-A- 102 111 209
- CN-A- 102 460 202
- CN-A- 106 205 136
- CN-A- 109 215 387

## Description

### TECHNICAL FIELD

This application relates to the field of terminal technologies, and in particular, to an ultra wide band positioning method, an ultra wide band device, and a computer-readable storage medium.

### BACKGROUND

Document WO 2015/018452 A1 describes a concept for enabling a person or system to find a stored or parked target object, wherein the target object cooperates in finding the location and a route thereto.

Document CN 1 926 775 A describes a multihop ultrawide band network.

As a high-throughput wireless transmission technology, the ultra wide band (Ultra Wide Band, UWB) technology was popular a decade ago. However, the UWB technology had many disadvantages at that time in application for file transmission compared with other technologies such as the wired USB technology, and thus was gradually forgotten. In recent years, other applications of the UWB technology have been gradually developed, and the UWB technology has also been used in more and more products such as smartphones, smart home products, and automobiles.

Unlike a conventional wireless communication mode in which communication is performed by using a very narrow frequency band, the UWB technology disperses signals on a very wide frequency band, so that communication based on the UWB technology is unlikely to be interfered, and even a low-energy signal can be correctly interpreted. In addition, the UWB technology is also widely used in ranging and positioning between devices. During UWB-based communication, a distance may be accurately calculated by calculating a difference between time when a transmitter device sends a signal and time when a receiver device receives the signal. This is referred to as a time of flight ranging (Time of Flight, ToF) function of the UWB technology, and the ToF function may achieve accuracy below a meter level. Moreover, a function of measuring an angle of arrival (Angle of Arrival, AOA) is also introduced into the newly developed UWB technology, which provides more abundant information for positioning between devices.

For reasons of the UWB technology, a communication coverage area of a UWB apparatus, which is an apparatus with a UWB communication capability, is approximately within 100 m. It can be seen that, once this range is exceeded, UWB-based direct communication between devices cannot be implemented. The limited communication range greatly hinders applications of the UWB technology in object positioning and tracking. If positioning and tracking are to be implemented in a larger range, other communication technologies are required to assist in communication. This brings additional costs, and may also cause poor user experience due to an additional communication device.

### SUMMARY

The above problems are solved by the subject-matter according to the independent claims. Some implementations of this application provide an ultra wide band positioning method, an ultra wide band device, and a computer-readable storage medium according to the independent claims. The following describes this application from a plurality of aspects. For implementations and beneficial effects of the following plurality of aspects, refer to each other.

According to a first aspect, an implementation of this application provides an ultra wide band positioning method, used in a system including an originating device, a plurality of relay devices, and a destination device. The method includes: The originating device generates and sends a first UWB positioning request. The first UWB positioning request indicates a request of the originating device for searching for the destination device. The plurality of relay devices forward at least one second UWB positioning request to the destination device through at least one path. Each second UWB positioning request is generated based on the first UWB positioning request, and includes a device identifier of a relay device that the second UWB positioning request passes through. Each of the at least one second UWB positioning request corresponds to one path in the at least one path. The path includes the originating device, the relay device, and the destination device. The destination device receives the at least one second UWB positioning request, and selects, based on the device identifier of the relay device included in the at least one second UWB positioning request, one second UWB positioning request from the at least one second UWB positioning request as a valid UWB positioning request. The destination device determines, based on the valid UWB positioning request, a positioning path that passes through the relay device and connects the originating device and the destination device, and generates and sends a UWB positioning response corresponding to the valid UWB positioning request. The UWB positioning response indicates the positioning path. The relay device on the positioning path forwards the UWB positioning response from the destination device to the originating device. The originating device receives the UWB positioning response, and determines a position of the destination device relative to the originating device based on the UWB positioning response.

According to the ultra wide band positioning method for a plurality of UWB devices provided in the first aspect of this application, a UWB technology is used, and a plurality of UWB devices are networked. Therefore, a communication coverage is effectively expanded while precision of the UWB technology in ranging and positioning is maintained. In some scenarios that cannot be covered by a wide area network, ranging and positioning can be implemented by only the UWB devices, and no additional device is required.

In some implementations, that the destination device selects, based on the device identifier of the relay device included in the at least one second UWB positioning request, one second UWB positioning request from the at least one second UWB positioning request as a valid UWB positioning request includes: The destination device determines, based on the device identifier of the relay device included in each second UWB positioning request, a quantity of relay devices that the second UWB positioning request passes through, and determines the valid UWB positioning request at least partially based on the quantity.

According to some implementations of this application, based on a quantity of relay devices that a UWB positioning request passes through, whether to use this message is determined. A used message can be determined relatively conveniently, thereby improving processing efficiency of the device.

In some implementations, that the destination device determines the valid UWB positioning request at least partially based on the quantity includes:
the destination device selects a second UWB positioning request that corresponds to a smallest quantity as the valid UWB positioning request.

According to some implementations of this application, based on a quantity of relay devices that a UWB positioning request passes through, whether to use this message is determined. Therefore, a message that passes through fewest intermediate relay devices can be used, and efficiency of communication between devices is improved.

In some implementations, that the destination device determines the valid UWB positioning request at least partially based on the quantity includes: The destination device selects a second UWB positioning request that corresponds to the smallest quantity and first arrives at the destination device as the valid UWB positioning request.

According to some implementations of this application, based on a quantity of relay devices that a UWB positioning request passes through, whether to use this message is determined. Therefore, a message that passes through fewest intermediate relay devices can be used, and efficiency of communication between devices is improved. Moreover, when a plurality of messages satisfy a given selection criterion, the message that first arrives is used, which means that a communication distance is shortest and/or a communication rate is highest. Therefore, communication efficiency can be maximized.

In some implementations, each of at least one relay device receives a plurality of UWB positioning requests. The plurality of UWB positioning requests include the first UWB positioning request from an originating apparatus and/or at least one second UWB positioning request from another relay device.

The destination device determines, based on a device identifier of a relay device included in each UWB positioning request, a quantity of relay devices that each UWB positioning request passes through, and selects, from each UWB positioning request at least partially based on the quantity, a UWB positioning request that is to be forwarded to the destination device and/or another relay device.

According to some implementations of this application, a relay device adds a device identifier of the relay device to a forwarded message, and a subsequent device may learn, by performing counting based on the device identifier, a quantity of relay points that the message passes through in a message forwarding process. Therefore, processing efficiency of the device is improved.

In some implementations, that each relay device selects, from each UWB positioning request at least partially based on the quantity, a UWB positioning request that is to be forwarded to the destination device and/or another relay device includes: forwarding, to the destination device and/or the another relay device, a UWB positioning request that corresponds to a smallest quantity.

According to some implementations of this application, a plurality of relay devices may be included in a communication range of the originating device, and messages may also be forwarded between the relay devices. By adding a determining mechanism, each relay device sends, to a next communication node, only a message that is forwarded by the smallest quantity of relay devices. This can reduce excessive forwarding of useless messages between these relay devices to prevent unnecessary occupation of communication resources and impact on efficiency of the entire communication system.

In some implementations, that each relay device selects, from each UWB positioning request at least partially based on the quantity, a UWB positioning request that is to be forwarded to the destination device and/or another relay device includes: forwarding, to the destination device and/or the another relay device, a UWB positioning request that corresponds to the smallest quantity and first arrives.

According to some implementations of this application, a plurality of relay devices may be included in a communication range of the originating device, and messages may also be forwarded between the relay devices. By adding a determining mechanism, each relay device sends, to a next communication node, only a message that is forwarded by the smallest quantity of relay devices. This can reduce excessive forwarding of useless messages between these relay devices to prevent unnecessary occupation of communication resources and impact on efficiency of the entire communication system. In addition, when a plurality of messages satisfy a given selection criterion, a message that first arrives is to be forwarded, which means that time required for transmission between relay points is shortest, and to some extent, means that a communication distance is shortest. Therefore, relatively high communication efficiency can be ensured.

In some implementations, that each relay device selects, from each UWB positioning request at least partially based on the quantity, a UWB positioning request that is to be forwarded to the destination device and/or another relay device includes: Each relay device skips forwarding a UWB positioning request that corresponds to a quantity greater than a first threshold.

According to some implementations of this application, a message such as a UWB positioning request may need to be forwarded for a plurality of times before arriving at the destination device. If the message is forwarded for too many times, it means that communication efficiency is very low. A threshold is set to limit a quantity of times that a message is forwarded in the system, which can greatly save communication resources of the system.

In some implementations, that the destination device generates and sends a UWB positioning response corresponding to the valid UWB positioning request includes: The destination device sends the UWB positioning response to the relay device, closest to the destination device, in the relay device on the positioning path.

According to some implementations of this application, the UWB positioning response is returned along an original path determined by the destination device, so that the positioning response corresponding to the positioning request is returned to the originating device along a path with optimal communication efficiency.

In some implementations, that the originating device determines a position of the destination device relative to the originating device based on the UWB positioning response includes: The originating device determines distances and angles between the devices on the positioning path based on the positioning path corresponding to the UWB positioning response, and determines the position of the destination device relative to the originating device based on the distances and the angles between the devices.

According to some implementations of this application, a communication coverage is effectively expanded while precision of the UWB technology in ranging and positioning is maintained. In some scenarios that cannot be covered by a wide area network, ranging and positioning can be implemented by only UWB devices to obtain relative coordinates of another UWB destination device relative to a UWB originating device, thereby further obtaining a distance and angle (orientation) between the two devices, and no additional device is required.

The originating device and the destination device share a first key. The originating device adds an identity verification field encrypted by using the first key to the sent UWB positioning request, and the destination device decrypts the identity verification field in the received UWB positioning request by using the first key, to confirm an identity of the originating device; and/or, the originating device decrypts an identity verification field in the received UWB positioning response by using the first key, to confirm an identity of the destination device.

According to some implementations of this application, the originating device and destination device of a user have a shared key that may be used for identity verification in a positioning operation, so as to prevent a person from maliciously returning incorrect positioning information in a relay process, and ensure security of an entire positioning process.

In some implementations, the originating device and the plurality of relay devices have a second key. The second key is used by the plurality of relay devices and/or the destination device to verify the received UWB positioning request. The destination device may also include such a second key to verify the received UWB positioning request.

According to some implementations of this application, all UWB devices included in such a communication system share a key. For example, only UWB devices manufactured by the same manufacturer or UWB devices manufactured according to the same standard are allowed to construct such a communication network to implement positioning. In this way, each device verifies a received message, so as to prevent information flooding caused by involving of a message of another manufacturer or another standard in this communication system.

In some implementations, verification of content of the received UWB positioning request by the plurality of relay devices includes: At least one relay device in the plurality of relay devices calculates a hash value of plaintext content of each received UWB positioning request by using the second key, compares the hash value with a content verification field in each UWB positioning request, where the content verification field is a hash value, calculated by a sending device of each UWB positioning request by using the second key, of the plaintext content of each UWB positioning request, and when the hash value is consistent with the content verification field, determines that the UWB positioning request is valid, or when the hash value is inconsistent with the content verification field, determines that the UWB positioning request is invalid.

According to some implementations of this application, hash calculation is performed on plaintext content by using a key, and then an obtained hash value is compared with a verification field that is also a hash value in a received message, so as to verify the message in a relatively efficient manner.

According to a second aspect, an embodiment of this application provides an ultra wide band (UWB) positioning method for a first relay device. The method includes: receiving at least one UWB positioning request, where the at least one UWB positioning request includes a first UWB positioning request from an originating device of a UWB positioning request, and/or a second UWB positioning request forwarded by another relay device, and the UWB positioning request indicates a request of the originating device for searching for a destination device; selecting one UWB positioning request from the at least one UWB positioning request, and generating a second UWB positioning request of the first relay device based on the selected UWB positioning request, where the second UWB positioning request of the first relay device further includes a device identifier of the first relay device; and sending the second UWB positioning request of the first relay device. Additionally, the method further comprises: verifying content of each UWB positioning request based on a second key shared by the originating device, the relay devices and the destination device.

According to the ultra wide band positioning method for a relay device provided in the second aspect of this application, a plurality of UWB devices are networked. Therefore, a communication coverage is effectively expanded while precision of a UWB technology in ranging and positioning is maintained. In some scenarios that cannot be covered by a wide area network, ranging and positioning can be implemented by only the UWB devices, and no additional device is required.

In some implementations, when the at least one UWB positioning request includes a plurality of UWB positioning requests, the selecting one UWB positioning request from the at least one UWB positioning request further includes:
determining, based on a device identifier of a relay device included in each of the at least one UWB positioning request, a quantity of relay devices that each UWB positioning request passes through, and selecting one UWB positioning request at least partially based on the quantity.

According to some implementations of this application, a relay device adds a device identifier of the relay device to a forwarded message, and a subsequent device may learn, by performing counting based on the device identifier, a quantity of relay points that the message passes through in a message forwarding process. Therefore, processing efficiency of the device is improved.

In some implementations, the selecting one UWB positioning request at least partially based on the quantity includes: forwarding, to the destination device and/or another relay device, a UWB positioning request that corresponds to a smallest quantity.

According to some implementations of this application, a plurality of relay devices may be included in a communication range of the originating device, and messages may also be forwarded between the relay devices. By adding a determining mechanism, each relay device sends, to a next communication node, only a message that is forwarded by the smallest quantity of relay devices. This can reduce excessive forwarding of useless messages between these relay devices to prevent unnecessary occupation of communication resources and impact on efficiency of the entire communication system.

In some implementations, the selecting one UWB positioning request at least partially based on the quantity includes: forwarding, to the destination device and/or another relay device, a UWB positioning request that corresponds to a smallest quantity and first arrives.

According to some implementations of this application, when a plurality of messages satisfy a given selection criterion, a message that first arrives is to be forwarded, which means that time required for transmission between relay points is shortest, and to some extent, means that a communication distance is shortest. Therefore, relatively high communication efficiency can be ensured.

According to some implementations of this application, all UWB devices included in such a communication system share a key. For example, only UWB devices manufactured by the same manufacturer or UWB devices manufactured according to the same standard are allowed to construct such a communication network to implement positioning. In this way, each device verifies a received message, so as to prevent information flooding caused by involving of a message of another manufacturer or another standard in this communication system.

The method further includes: verifying content of each UWB positioning request based on a preset key.

In some implementations, the verifying each UWB positioning request includes:
calculating a hash value of plaintext content of each UWB positioning request by using the key;
comparing the hash value with a content verification field in each UWB positioning request, where the content verification field is a hash value, calculated by a sending device of each UWB positioning request by using the second key, of the plaintext content of the UWB positioning request; and when the hash value is consistent with the identity verification field, determining that the UWB positioning request is valid, or when the hash value is inconsistent with the identity verification field, determining that the UWB positioning request is invalid.

In some implementations, the method further includes: receiving a first UWB positioning response from the destination device or another relay device, where the first UWB positioning response indicates a positioning path that is determined by the destination device and connects the destination device and the originating device;
generating a second UWB positioning response based on the first UWB positioning response, where the second UWB positioning response indicates the positioning path, and includes the device identifier of the first relay device; and
sending the second UWB positioning response to the originating device or another relay device on the positioning path.

According to some implementations of this application, the UWB positioning response is returned along an original path determined by the destination device, so that the positioning response corresponding to the positioning request is returned to the originating device along a path with optimal communication efficiency.

According to a third aspect, an embodiment of this application provides an ultra wide band (UWB) positioning method for an originating device, including: sending a UWB positioning request, where the UWB positioning request indicates a request of the originating device for searching for a destination device; receiving a UWB positioning response, where the UWB positioning response indicates a positioning path that is determined by the destination device and connects the originating device and the destination device, the positioning path includes a device identifier of at least one relay device, and the at least one device is configured to relay, from the originating device to the destination device, the request of the originating device for searching for the destination device; and determining a position of the destination device relative to the originating device based on the UWB positioning response. Additionally, the originating device and the destination device share a first key; and the originating device adds an identity verification field encrypted by using the first key to the sent UWB positioning request and/or the originating device decrypts an identity verification field in the received UWB positioning response by using the first key to confirm an identity of the destination device.

According to the ultra wide band positioning method for the originating device provided in the third aspect of this application, a plurality of UWB devices are networked. Therefore, a communication coverage is effectively expanded while precision of a UWB technology in ranging and positioning is maintained. In some scenarios that cannot be covered by a wide area network, ranging and positioning can be implemented by only the UWB devices, and no additional device is required.

According to a fourth aspect, an embodiment of this application provides an ultra wide band (UWB) positioning method for a destination device, including: receiving at least one UWB positioning request, where each UWB positioning request in the at least one positioning request indicates request information of an originating device for searching for the destination device, and each of the at least one UWB positioning request includes a device identifier of a relay device that the UWB positioning request passes through; determining, based on the device identifier of the relay device included in each UWB positioning request, a quantity of relay devices that each UWB positioning request passes through, and selecting, at least partially based on the quantity of relay devices included in each UWB positioning request, one UWB positioning request from the at least one UWB positioning request as a valid UWB positioning request, where the relay device is configured to relay, to the destination device, the request information of the originating device for searching for the destination device; determining, based on the valid UWB positioning request, a positioning path that connects the originating device and the destination device; and generating and sending a UWB positioning response, where the UWB positioning response indicates the positioning path. Additionally, the method further comprises: verifying each UWB positioning request based on a first key shared by the destination device and the originating device, to determine validity of each UWB positioning request.

According to the ultra wide band positioning method for the destination device provided in the fourth aspect of this application, a plurality of UWB devices are networked. Therefore, a communication coverage is effectively expanded while precision of a UWB technology in ranging and positioning is maintained. In some scenarios that cannot be covered by a wide area network, ranging and positioning can be implemented by only the UWB devices, and no additional device is required.

In some implementations, the selecting, at least partially based on the quantity of relay devices included in each UWB positioning request, one UWB positioning request from the at least one UWB positioning request as a valid UWB positioning request includes: selecting a UWB positioning request that corresponds to a smallest quantity as the valid UWB positioning request.

In some implementations, the selecting, at least partially based on the quantity of relay devices included in each UWB positioning request, one UWB positioning request from the at least one UWB positioning request as a valid UWB positioning request includes: selecting a UWB positioning request that corresponds to a smallest quantity and first arrives as the valid UWB positioning request.

In some implementations, the sending the UWB positioning response includes: sending the UWB positioning response to a relay device, closest to the destination device, in a relay device on the positioning path.

The method further includes: verifying each UWB positioning request based on a shared key shared by the destination device and the originating device, to determine validity of each UWB positioning request.

According to a fifth aspect, an embodiment of this application provides a relay device supporting ultra wide band positioning. The relay device is configured to perform the method according to the second aspect and includes: a message receiving module, configured to receive at least one UWB positioning request, where the at least one UWB positioning request includes a first UWB positioning request from an originating device of a UWB positioning request, and/or a second UWB positioning request forwarded by another relay device, and the UWB positioning request indicates a request of the originating device for searching for a destination device; a message generation module, configured to select one UWB positioning request from the at least one UWB positioning request, and generate a second UWB positioning request of the first relay device based on the selected UWB positioning request, where the second UWB positioning request of the first relay device further includes a device identifier of the first relay device; and a message sending module, configured to send the second UWB positioning request of the first relay device.

According to a sixth aspect, an embodiment of this application provides an originating device supporting ultra wide band positioning method. The originating device is configured to perform the method according to the third aspect and includes: a message sending module, configured to send a UWB positioning request, where the UWB positioning request indicates a request of the originating device for searching for a destination device; a message receiving module, configured to receive a UWB positioning response, where the UWB positioning response indicates a positioning path that is determined by the destination device and connects the originating device and the destination device, the positioning path includes a device identifier of at least one relay device, and the at least one device is configured to relay, from the originating device to the destination device, the request of the originating device for searching for the destination device; and a positioning module, configured to determine a position of the destination device relative to the originating device based on the UWB positioning response.

According to a seventh aspect, an embodiment of this application provides a destination device supporting ultra wide band positioning. The destination device is configured to perform the method according to the fourth aspect and includes: a message receiving module, configured to receive at least one UWB positioning request, where each UWB positioning request in the at least one positioning request indicates request information of an originating device for searching for the destination device, and each of the at least one UWB positioning request includes a device identifier of a relay device that the UWB positioning request passes through; a message generation module, configured to determine, based on the device identifier of the relay device included in each UWB positioning request, a quantity of relay devices that each UWB positioning request passes through, and select, at least partially based on the quantity of relay devices included in each UWB positioning request, one UWB positioning request from the at least one UWB positioning request as a valid UWB positioning request, where the relay device is configured to relay, to the destination device, the request information of the originating device for searching for the destination device, and the message generation module is further configured to determine, based on the valid UWB positioning request, a positioning path that connects the originating device and the destination device, and generate a UWB positioning response; and a message sending module, configured to send the UWB positioning response, where the UWB positioning response indicates the positioning path.

According to the UWB devices provided in the fifth, sixth, and seventh aspects of this application, the UWB devices implement the ultra wide band positioning method according to this application. A plurality of UWB devices are networked to implement positioning between devices, which effectively expands a communication coverage while maintaining precision of a UWB technology in ranging and positioning. In some scenarios that cannot be covered by a wide area network, ranging and positioning can be implemented by only the UWB devices, and no additional device is required.

According to an eighth aspect, an embodiment of this application provides an ultra wide band (UWB) communication system, including an originating device, a plurality of relay devices, and a destination device according to the fifth, sixth, and seventh aspects.

The originating device generates and sends a first UWB positioning request. The first UWB positioning request indicates a request of the originating device for searching for the destination device.

The plurality of relay devices forward at least one second UWB positioning request to the destination device through at least one path. Each second UWB positioning request is generated based on the first UWB positioning request, and includes a device identifier of a relay device that the second UWB positioning request passes through. Each of the at least one second UWB positioning request corresponds to one path in the at least one path. The path includes the originating device, the relay device, and the destination device.

The destination device receives the at least one second UWB positioning request, and selects, based on the identifier of the relay device included in the at least one second UWB positioning request, one second UWB positioning request from the at least one second UWB positioning request as a valid UWB positioning request.

The destination device determines, based on the valid UWB positioning request, a positioning path that passes through the relay device and connects the originating device and the destination device, and generates and sends a UWB positioning response corresponding to the valid UWB positioning request. The UWB positioning response indicates the positioning path.

The relay device on the positioning path forwards the UWB positioning response from the destination device to the originating device.

The originating device receives the UWB positioning response, and determines a position of the destination device relative to the originating device based on the UWB positioning response.

According to the UWB communication system provided in the eighth aspect of this application, the UWB communication system may implement the ultra wide band positioning method according to this application. A plurality of UWB devices are networked to implement positioning between devices, which effectively expands a communication coverage while maintaining precision of a UWB technology in ranging and positioning. In some scenarios that cannot be covered by a wide area network, ranging and positioning can be implemented by only the UWB devices, and no additional device is required.

According to a ninth aspect, an embodiment of this application provides a machine-readable storage medium. The machine-readable storage medium stores program code. When the program code is executed on a machine, the machine is enabled to perform the method according to any one of the second to fourth aspects.

According to a tenth aspect, an embodiment of this application provides an ultra wide band (UWB) device, including a processor and a storage medium. The storage medium is coupled to the processor. The storage medium is configured to store program code. When the processor reads the program code from the storage medium, the ultra wide band device is enabled to perform the method according to any one of the second to fourth aspects.

According to an eleventh aspect, some embodiments of this application provide a chip. The chip includes a processor and a data interface. The processor reads, through the data interface, instructions stored in a memory, to perform the method according to any one of the second to fourth aspects.

According to a twelfth aspect, some embodiments of this application provide a computer program. When the computer program is run on a computer, the computer is enabled to perform the method according to any one of the second to fourth aspects.

According to the machine-readable storage medium, ultra wide band (UWB) device, chip, and computer program provided in the tenth, eleventh, and twelfth aspects of this application, the machine-readable storage medium, the ultra wide band (UWB) device, the chip, and the computer program may be implemented as UWB devices to implement the ultra wide band positioning method according to this application. A plurality of UWB devices are networked to implement positioning between devices, which effectively expands a communication coverage while maintaining precision of a UWB technology in ranging and positioning. In some scenarios that cannot be covered by a wide area network, ranging and positioning can be implemented by only the UWB devices, and no additional device is required.

### BRIEF DESCRIPTION OF DRAWINGS

FIG. 1 shows a scenario of an ultra wide band (UWB) positioning method for a plurality of electronic devices according to this application;
FIG. 2 is a schematic diagram depicting a structure of an electronic device according to this application;
FIG. 3 is a schematic diagram depicting a structure of a UWB device according to this application;
FIG. 4(a) shows a process of ToF ranging between two UWB devices according to this application;
FIG. 4(b) shows a process of measuring an angle between two UWB devices according to this application;
FIG. 4(c) shows a process of correcting a distance and angle that are obtained through measurement according to this application;
FIG. 5(a) to FIG. 5(d) are scenario diagrams of ultra wide band positioning according to this application;
FIG. 6 is a flowchart of a UWB-technology-based positioning method according to this application;
FIG. 7 is a schematic diagram of calculating, by a UWB device, positioning of another UWB device according to this application;
FIG. 8 shows a process of forwarding a UWB request from an originating device to a destination device and a process of forwarding a UWB positioning response message from the destination device to the originating device according to this application;
FIG. 9 shows a quantity of levels at which a UWB positioning request is forwarded in an example scenario according to this application;
FIG. 10 is a block diagram of a UWB device serving as a relay device according to this application;
FIG. 11 is a block diagram of a UWB device serving as an originating device according to this application; and
FIG. 12 is a block diagram of a UWB device serving as a destination device according to this application.

### DESCRIPTION OF EMBODIMENTS

The following describes specific implementations of this application in detail with reference to the accompanying drawings.

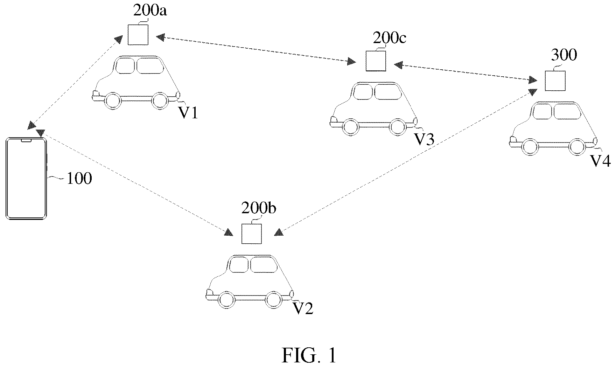

FIG. 1 shows a scenario of an ultra wide band (UWB) positioning method for a plurality of electronic devices according to this application. FIG. 1 shows an application scenario of UWB in a parking lot. A user of a mobile phone 100 needs to search for a vehicle V4 of the user in the parking lot. If the parking lot is underground, a communication condition of a wireless communication technology, such as 4G, 5G, and Wi-Fi, is extremely unsatisfactory, and the user cannot use these wireless communication technologies to position the vehicle of the user.

In this case, a UWB positioning method for a plurality of electronic devices according to this application may be used, in which a UWB technology is used, so that the user finds a relatively precise position of the vehicle V4 by using the mobile phone 100.

The mobile phone 100 has a UWB communication capability, and serves as an originating device. The vehicle V4 of the user has a UWB device 300, which serves as a destination device. The UWB device 300 may be a dedicated device integrated into the vehicle.

In addition, several vehicles in the parking lot also have UWB devices. As shown in FIG. 1, a UWB device 200a integrated into a vehicle V1, a UWB device 200b integrated into a vehicle V2, and a UWB device 200c integrated into a vehicle V3 serve as relay devices.

Based on a UWB communication technology, the mobile phone 100 sends a positioning request to search for the UWB device 300 on the vehicle V4. The request sent by the mobile phone 100 is received, in a broadcast manner, by the UWB device 200a that serves as a relay device within a UWB communication range of the mobile phone 100. There is still a certain distance between the UWB device 200a and the vehicle V4 as well as the UWB device 300. Therefore, the UWB device 200a further forwards the request to the UWB device 200c on the vehicle V3 within a communication range of the UWB device 200a. The UWB device 200c forwards the request to the UWB device 300 on the vehicle V4 within a communication range of the UWB device 200c. The UWB device 300 receives the positioning request forwarded by the USB device 200c. Because the relay device keeps a record in the positioning request each time the positioning request is forwarded, the UWB device 300 may determine a sending path of the positioning request from the request.

As an example, only three UWB devices are shown herein as relay devices. However, this application is not limited thereto, and there may be more UWB devices serving as relay devices. Therefore, there may be a plurality of such relay transmission paths. The UWB device 300 may receive a plurality of forwarded positioning requests.

The UWB device 300 analyzes sending paths included in the plurality of positioning requests, selects one of the sending paths, and returns, as response information of the positioning request, its own information to the mobile phone 100 through a relay device (for example, relay devices 200a and 200b shown in FIG. 1) along the sending path. The mobile phone 100 may determine positioning information, such as a distance and an angle, of the UWB device 300, that is, the vehicle V4, based on the response information of the received positioning request.

According to the ultra wide band positioning method for a plurality of UWB devices provided in this application, a UWB technology is used, and a plurality of UWB devices are networked. Therefore, a communication coverage is effectively expanded while precision of the UWB technology in ranging and positioning is maintained. In some scenarios that cannot be covered by a wide area network, ranging and positioning can be implemented by only the UWB devices, and no additional device is required.

According to some implementations of this application, for example, the mobile phone 100 has an application program (APP) that matches the UWB positioning technology, and such positioning information may be displayed on a screen of the mobile phone, for example, "the vehicle V4 is 250 meters away from you and is positioned in the northeast", or a distance and orientation of the vehicle V4 relative to the mobile phone 100 may be displayed in a form of a radar chart. The foregoing presentation manner is merely an example for description, and this application is not limited thereto.

In a conventional technology, positioning of a target device needs at least a support of a communication terminal with a mobile communication capability (connected to a wide area network) (that is, a combination of mobile communication and UWB). If the user does not have a mobile device at hand, or there is no wide area network connection in some specific scenarios (for example, in the foregoing example, in the underground parking lot, a mobile communication signal is not ideal), it is difficult to position the target device. In another conventional technical solution, a coverage of a UWB device is expanded by deploying an anchor device. However, such deployment of the anchor device brings about additional costs, and imposes a location requirement.

Unlike the conventional technology, according to the UWB-technology-based positioning method in this application, in an entire process in which an originating device searches for a destination UWB apparatus as a positioning target by using only a plurality of relay UWB devices, only a UWB technology is used, and no other additional communication network support and device support are required. According to the technical solutions of this application, a feature of accurate positioning of the UWB technology is fully utilized, and several UWB devices are connected in series in a form of an ad hoc network, thereby effectively enlarging a coverage area, and overcoming a disadvantage of limited coverage area of a single UWB device during use.

In the description of the foregoing scenario, the UWB devices 200a, 200b, 200c, and the like, and the UWB device 300 are devices integrated into the vehicles. In another implementation scenario, some or even all of these UWB devices may be integrated into parking payment cards in the parking lot. In addition to implementing charging, the UWB devices may be used as a vehicle positioning tag (Tag) if being left on the vehicles, which will provide great convenience for users in the parking lot.

In the description of the foregoing application scenario, the mobile phone 100 is provided as an example of an originating device of a positioning request. According to implementations of this application, the electronic device may be a terminal device with a communication function, such as a tablet computer with a UWB communication capability, a notebook computer, an ultra-mobile personal computer (ultra-mobile personal computer, UMPC), a handheld computer, a netbook, a personal digital assistant (personal digital assistant, PDA), a wearable electronic device, or a virtual reality device. This is not limited in this application.

In the description of the foregoing application scenario, the UWB devices 200a, 200b, 200c, and the like that serve as relay apparatuses on the vehicles V1, V2, and V3, and the UWB device 300 and the like on the vehicle V4 are used as examples such as dedicated positioning apparatuses with the UWB communication capability. Such a UWB device may be disposed, by integration, on an object with a specific size, such as a vehicle or a smart home device, or may be disposed with a relatively small size so as to be convenient to carry around (for example, in an application scenario in which an object is stored, or in an application scenario in which a child is prevented from being lost) or carry by an animal (for example, in an application scenario in which a pet is prevented from being lost), or to be convenient to attach to a personal object (for example, in an application scenario in which a personal object is prevented from being lost). This is not limited in this application.

In the description of the foregoing application scenario, although the mobile phone 100 is an example of an originating device of a positioning request, the UWB devices 200a, 200b, 200c, and the like are examples of relay devices, and the UWB device 300 is an example of a destination device, this application is not limited to thereto, the UWB device may alternatively serve as an originating device, and the mobile phone may alternatively serve as a relay device or a destination device.

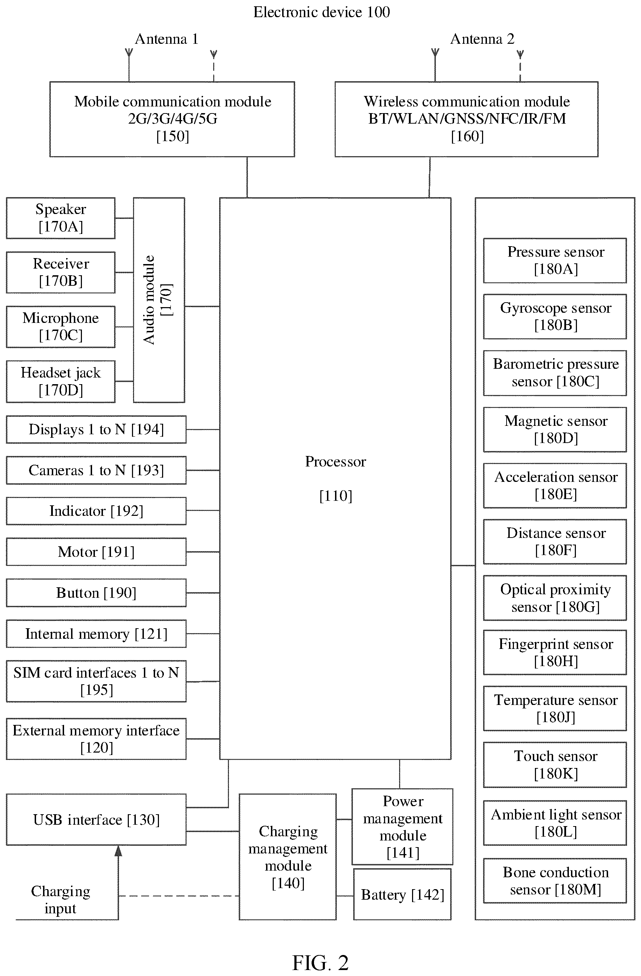

A specific structure of an electronic device 100 with a UWB communication capability is described below with reference to the accompanying drawings. FIG. 2 is a schematic diagram depicting a structure of the electronic device 100. The electronic device 100 is implemented as the mobile phone 100 in the foregoing application scenario.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on an instruction operation code and a time sequence signal to control instruction fetching and instruction executing.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, or a subscriber identity module (subscriber identity module, SIM) interface.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes ultra wide band (Ultra Wide Band, UWB), a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 may communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The external memory interface 120 may be used to connect an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

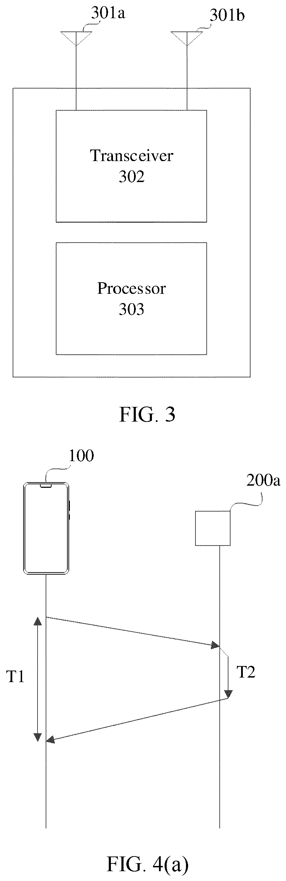

FIG. 3 is a schematic diagram depicting a structure of a UWB device 300. A same or similar structure of the UWB device 300 is implemented as the UWB device 200a, 200b, 200c, or the like in the foregoing application scenario. As an example, the UWB device 300 may be implemented as a UWB tag (tag). For example, in the scenario shown in FIG. 1, the UWB device 300 may be attached to a vehicle, or may be attached to a parking card.

As shown in FIG. 3, the UWB device 300 includes antennas 301a and 301b, a transceiver 302, and a processor 303. The antennas 301a and 301b are configured to receive a UWB signal sent by another UWB device, or serve as transmitting antennas for the UWB device 300 to transmit UWB signals. After receiving the signals from the antennas 301a and 301b, the transceiver 302 transmits the signals to a storage area (not shown in FIG. 3) of the processor 303. After a to-be-transmitted signal of the UWB device 300 is generated under an instruction of the processor 303, the transceiver 302 also reads the corresponding signal from the storage area of the processor 303, and transmits the signal to the antennas 301a and 301b for sending. The processor 303 is further configured to parse the received signal, for example, read, according to a positioning request in specific embodiments of this application, various information included in the positioning request, for example, information about a relay device. The processor 303 is further configured to perform various calculations based on the information included in the positioning request, for example, calculate a distance between the UWB devices and an angle (orientation) between the UWB devices. The processor 303 is further configured to generate various information, for example, used as response information of the positioning request, to indicate a transmission path of the relay device of the signal.

As described above, the UWB device 200a, UWB device 200b, and UWB device 200c that are shown in FIG. 1 may be of a same structure as the UWB device 300, where each component has a same function. When the UWB device shown in FIG. 3 is implemented as the UWB device 200a, 200b, or 200c serving as a relay device, the processor 303 is further configured to generate a UWB positioning request that is based on the positioning request and is used for relaying. The UWB device shown in FIG. 3 may be alternatively implemented as the UWB device 200a, 200b, or 200c serving as an originating device.

The UWB device shown in FIG. 3 is merely an example for description. Only a part closely related to a specific implementation of this application is shown, and other devices supporting operation of the UWB device are not completely listed herein, including, but not limited to, a power supply part, a power supply interface, or the like. In addition, FIG. 3 shows only two UWB antennas 301a and 301b, but this application does not intend to limit the quantity of antennas in a UWB setting.

The following explains, with reference to the accompanying drawings, the UWB communication technology used by the UWB devices (including the mobile phone 100 and the UWB devices 200a, 200b, 200c, 300, and the like shown in FIG. 1) according to this application, in particular ranging and directional features.

In a UWB-based point-to-point (P2P) positioning technology, two UWB devices may be measured by using ToF and AoA features of UWB to determine a distance and relative orientation between the devices. The following describes, with reference to FIG. 4(a), a process of ToF ranging between two UWB devices. As shown in FIG. 4(a), the mobile phone 100 intends to measure a distance between the mobile phone 100 and the UWB device 200a by using a ToF ranging method. The distance between the mobile phone 100 and the UWB device 200a is measured by using time of flight of a signal between the mobile phone 100 and the UWB device 200a. A time interval between sending of a data packet and receiving of a response from the UWB device 200a by the mobile phone 100 is recorded as T1, and a time interval between receiving of the data packet and sending of the response by the UWB device 200a is recorded as T2. In this case, time T of a one-way flight of the data packet over the air may be calculated as: T=(T1-T2)/2. The distance between the mobile phone 100 and the UWB device 200a may be calculated by multiplying T by the speed of light.

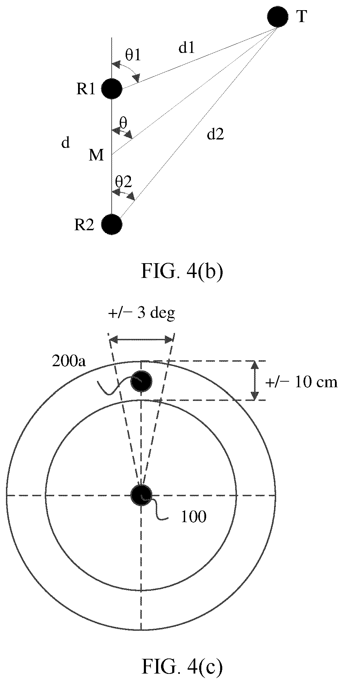

The following describes, with reference to FIG. 4(b), a process for measuring an angle between two UWB devices. As shown in FIG. 4(b), UWB communication is generally performed in a UWB device by using two transmitting and receiving antennas, as shown by R1 and R2 in FIG. 4(b). A distance d between the antennas R1 and R2 in the UWB device is known. Positions d1 and d2 of the antennas R1 and R2 relative to a target UWB device may be obtained by using the ToF ranging method. As shown in FIG. 4(b), connection lines between the antennas R1 and R2 and the target UWB device T form a triangle. An acute angle formed by extension lines of the connection lines R2R1 and R1T is recorded as θ1, an acute angle formed by the connection lines R2R1 and R2T is recorded as θ2, and an acute angle formed by a median TM of the triangle and the connection line R2R1 is recorded as θ. θ is considered as a relative angle between the UWB devices. Therefore, when lengths of d1 and d2 are obtained through ToF measurement, a value of θ1 or θ2 may be obtained through calculation by using a trigonometric function. Because a distance D of the median TM is far greater than the distance between the antennas R1 and R2, approximation may be made: θ1=θ2=θ. In this way, the relative angle θ between the UWB devices may be obtained.

After the distance and angle between the two UWB devices are obtained through calculation described above, a certain error is considered, as shown in FIG. 4(c), and corresponding correction may be performed to obtain the distance and relative angle between the two UWB devices. That is, one UWB device learns the distance and angle of the other UWB device relative to the one UWB device.

The UWB positioning method according to embodiments of this application is further described below with reference to the scenario shown in FIG. 1.

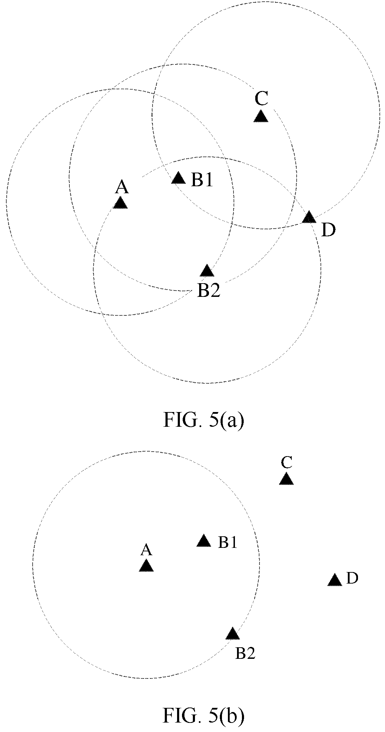

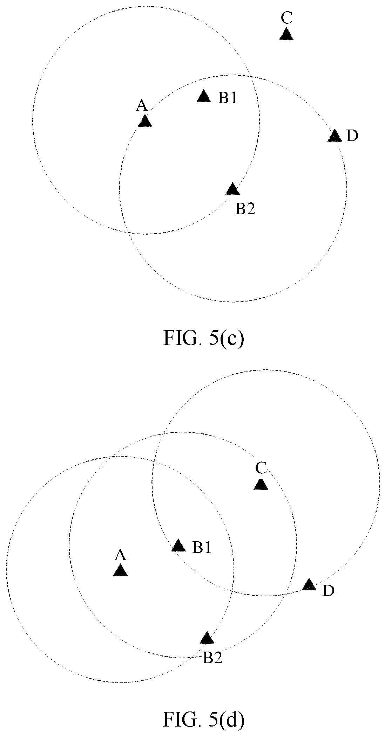

For ease of explaining embodiments of this application, the scenario shown in FIG. 1 is abstracted into FIG. 5(a) to FIG. 5(d). FIG. 5(a) shows five points A, B1, B2, C, and D respectively. Point A represents the mobile phone 100 in FIG. 1, which serves as an originating device for implementing the positioning method. D represents the UWB device 300 on the vehicle V4 in FIG. 1, which serves as a destination device in the positioning method. B1, B2, and C correspond to the UWB device 200a on the vehicle V1, the UWB device 200b on the vehicle V2, and the UWB device 200c on the vehicle V3 respectively, which serve as relay devices. A dashed circle is drawn by using each point as a circle center, and a range covered by the dashed circle represents a communication coverage of the UWB device that is used as the circle center of the dashed circle. As shown in FIG. 5(a) and FIG. 5(b), B1 (a relay device, located in the vehicle V1) and B2 (a relay device, located in the vehicle V2) can be discovered within a communication coverage of A (that is, the mobile phone 100), and C (a relay device, located in the vehicle V3) and D (the destination device, located in the vehicle V4) are outside the communication coverage of A. As shown in FIG. 5(a) and FIG. 5(c), A and D (located in the vehicle V4) can be discovered within a communication coverage of B2 (located in the vehicle V2), but C is outside the communication coverage. As shown in FIG. 5(a) and FIG. 5(d), A and C (located in the vehicle V3) can be discovered within a communication coverage of B1 (located in the vehicle V1), and D (located in the vehicle V4) can be discovered within a communication coverage of C. That is, based on the communication coverage of each UWB device, the originating device A can find the destination device D through two different paths: one path passes through the relay device B2, and the other path passes through the relay device B1 and the relay device C.

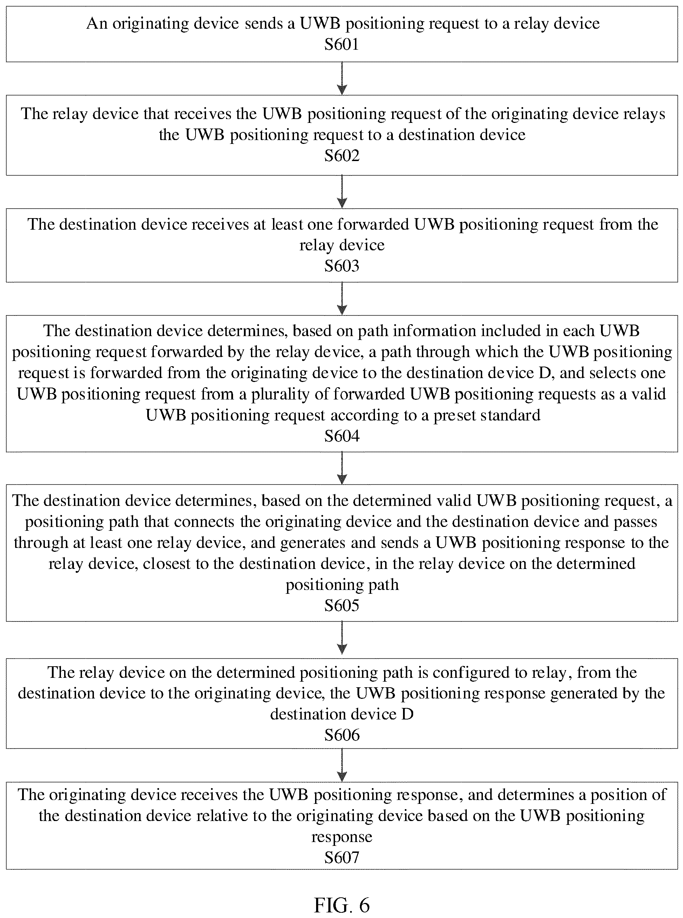

The following further describes a process of the UWB positioning method according to this application with reference to FIG. 5(a) to FIG. 5(d) and FIG. 6. FIG. 6 is a flowchart of a UWB-technology-based positioning method according to this application.

In step S601, the originating device A sends a UWB positioning request to the relay devices (B1, B2). The UWB positioning request generated by the originating device A indicates that the originating device A is searching for the destination device D.

Table 1 shows an example data structure of the UWB positioning request sent by the device A.

**Table 1 Example structure of UWB positioning request**

| | | | | |
|---|---|---|---|---|
| Preamble | SFD | PHR | Payload | Cypher |

The UWB positioning request message shown in Table 1 sequentially includes a preamble (Preamble) field, an SFD (Standard-of-Frame Delimiter, start frame delimiter) field, a PHR (PHY header, physical layer header) field, a payload (Payload) field, and a cypher (Cypher) field. The preamble field is used for synchronization of a packet of the UWB positioning request message, and a start point of the packet may be calculated by using the preamble field. The SFD field is used to accurately find a sequence of the data start point, and is used to read data in the packet. The PHR field is used to indicate a data format for displaying a payload, for example, a data transmission rate and a length of encapsulated data. The cypher (Cypher) field is used to set a security mechanism in a message forwarding process. Details about the cypher (Cypher) field will be explained in detail later.

The following describes the payload (Payload) field in the message in detail.

The payload (Payload) field usually contains 1024 bytes (byte). According to some implementations of this application, the payload field includes a device identifier (id) of the originating device A, a device identifier of the destination device D used as a positioning target, and path information about a path that the packet passes through. The device identifier may be used to uniquely identify the UWB device in a communication system, and may be a character string including letters, digits, or the like. A form of the device identifier is not limited herein in this application.

For the path information in the payload field, when the UWB positioning request message is forwarded by any relay device, the relay device adds a device identifier of the relay device to a field that is in the payload and that corresponds to the path information. In this way, the device receiving the UWB positioning request message may interpret, from the path information included in the payload field, which device sends the UWB positioning request, which device is an object to be searched for, and which devices perform relay forwarding.

For example, in the UWB message generated by the originating device A, an original field indicating the path in the payload may be recorded as AD. This is because the UWB message of the originating device A is not forwarded by any relay device at this point, and therefore, the path field in this case includes only the device identifier A of the originating device and the device identifier D of the destination device. As described above, the originating device A may find the destination device D through two different paths. One passes through the relay device B2. That is, the message is sent by the originating device A to the relay device B2, and then is forwarded by the relay device B2 to the destination device D. When receiving the message and forwarding the message to the destination device D, the relay device B2 adds the device identifier of the relay device B2 to the field indicating the path in the payload, namely changes the original field indicating the path from AD to AB2D. The second passes through the relay device B1 and the relay device C. Similarly, the field indicating the path in the message forwarded by the relay device B1 is changed from AD to AB1D. The message forwarded by the relay device B1 is forwarded by the relay device C to the destination device D. The relay device C also adds a device identifier of the relay device C to the received message, where the field indicating the path is changed from AB1D to AB1CD.

In step S602, the relay device that receives the UWB positioning request of the originating device A relays the UWB positioning request to the destination device. In this process, in the case shown in FIG. 5(c), the positioning request may be transmitted from the originating device A to the destination device D through only one relay device B2. Therefore, only one relay device participates in this relay process. In the case shown in FIG. 5(d), the positioning request is transmitted from the originating device A to the destination device D through two relay devices: the relay device B1 and the relay device C. Therefore, two relay devices participate in this relay process. A relay device closest to A relays request information of the originating device A for searching for the destination device D to the destination device through another relay device (in another scenario that is not shown, two or more relay devices may be included). In a process in which the relay device forwards the UWB positioning request, the relay device adds an identifier of the relay device to the forwarded UWB positioning request, so as to indicate a path for forwarding the UWB positioning request. A process of adding the device identifier to the message is the same as the foregoing explanation made with reference to Table 1, and details are not described herein.

When receiving a message sent by a previous node, each relay device may determine, based on a field that indicates a path and that is included in a payload of the message, devices that forward the message. Based on the field indicating the path, the name of the relay node that the message passes through and the quantity of relay nodes that the message passes through, that is, the quantity of times that the message is forwarded, may be obtained. For example, based on the field AD indicating the path, the device receiving the message may learn that the message is not forwarded by any relay device (0 relay devices). Based on the path field AB2D indicating the path, the device receiving the message may learn that the message is forwarded by one relay device B2. Based on the field AB1CD indicating the path, the device receiving the message may learn that the message is forwarded by two relay devices B1 and C. According to some implementations of this application, to improve communication efficiency and save communication resources, when receiving a plurality of messages, the relay device selectively forwards the messages. Specifically, the relay device selects the message that is forwarded for a small quantity of times, and forwards the message to a next node.

According to some implementations of this application, a relay device determines, based on a quantity of relay devices that a UWB positioning request passes through, whether to use this message. A used message can be determined relatively conveniently, thereby improving processing efficiency of the device.

For example, for the relay devices B1 and B2, both are within the communication coverage of the originating device A. The UWB message generated by the device A is broadcast to both devices B1 and B2. The devices B1 and B2 may be considered as devices at a same layer relative to the device A. Specifically, in a signal processing process, the device B1 receives a signal (a path is AD) sent by the device A, and further receives a signal (a path is AB2D) forwarded by the device B2. Similarly, the device B2 receives the signal sent by the device A (the path is AD), and further receives a signal forwarded by the device B1 (a path is AB1D). The device B1 receives the signal directly from the device A and the signal forwarded by the device B2, and finds, by analyzing path information contained in the signals, that both messages are sent from the device A to search for the device D, but the message from the device B2 passes through an additional relay node. Therefore, the device B1 "discards" the message that is from the device A and is forwarded by the device B2, but forwards only the message directly from the device A to a next node (for example, the device C shown in FIG. 5 (a)). Similarly, the device B1 receives the signal directly from the device A and the signal forwarded by the device B2, and the device B2 "discards" the message that is from the device A and is forwarded by the device B1, but forwards only the message directly from the device A to a next node (for example, the device D shown in FIG. 5(a)).

By adding the foregoing determining mechanism, each relay device sends, to a next communication node, only a message that is forwarded by the smallest quantity of relay devices. This can reduce excessive forwarding of useless messages between these relay devices to prevent unnecessary occupation of communication resources and impact on efficiency of the entire communication system.

In step S603, the destination device D receives at least one forwarded UWB positioning request from the relay device, where each UWB positioning request forwarded to the destination device D indicates the request information of the originating device A for searching for the destination device D, and further includes an identifier representing the relay device through which the UWB positioning request is forwarded to the destination device.

In step S604, the destination device D determines, based on the path information included in each UWB positioning request forwarded by the relay device, in other words, the identifier of the relay device included in the positioning request, a path through which the UWB positioning request is forwarded from the originating device A to the destination device D, and selects one UWB positioning request from a plurality of forwarded UWB positioning requests as a valid UWB positioning request according to a preset standard.

According to some implementations of this application, a relay device adds a device identifier of the relay device to a forwarded message, and a subsequent device may learn, by performing counting based on the device identifier, a quantity of relay points that the message passes through in a message forwarding process. Therefore, processing efficiency of the device is improved.

According to some implementations of this application, after receiving a plurality of UWB messages forwarded through different paths (by different relay devices), the destination device D may select, based on path information in each UWB message, the UWB message that includes fewest relay nodes in the path as the valid UWB positioning request.

Based on a quantity of relay devices that a UWB positioning request passes through, whether to use this message is determined. Therefore, a message that passes through fewest intermediate relay devices can be used, and efficiency of communication between devices is improved.

According to some implementations of this application, after receiving a plurality of UWB messages forwarded through different paths (by different relay devices), the destination device D selects, based on path information in each UWB message, a plurality of, for example, two, UWB messages that include fewest relay nodes in the path, and the destination device D may determine the UWB positioning request, that first arrives the destination device D, in the two UWB messages as the valid UWB positioning request. As shown in FIG. 5(a), the UWB positioning request forwarded by the device B2 to the device D is determined as a valid UWB positioning request.

When a plurality of messages satisfy a given selection criterion, the message that first arrives is used, which means that a communication distance is shortest and/or a communication rate is highest. Therefore, communication efficiency can be maximized.

According to some implementations of this application, after receiving a plurality of UWB messages forwarded through different paths (by different relay devices), the destination device D selects, based on path information in each UWB message, a plurality of, for example, two, UWB messages that include fewest relay nodes in the path, and the destination device D may determine the UWB positioning request, that first arrives the destination device D, in the two UWB messages as the valid UWB positioning request. Alternatively, the destination device D calculates, based on these paths, distances that the UWB positioning requests pass through when being transmitted from the originating device A to the destination device D through each relay node, and then selects the UWB positioning request corresponding to a shortest propagation distance as the valid UWB positioning request.

According to some implementations of this application, when determining the valid UWB request, the destination device D may directly determine, based on a time sequence of the UWB messages arriving at the destination device D, the positioning request that first arrives at the device D as the valid positioning request, without considering a quantity of relay nodes.

According to some implementations of this application, after the destination device D receives a plurality of UWB messages forwarded through different paths (by different relay devices), when determining the valid UWB request, the destination device D may calculate, based on these paths, distances that the UWB positioning requests pass through when being transmitted from the originating device A to the destination device D through each relay node, and then select the UWB positioning request corresponding to a shortest propagation distance as the valid UWB positioning request, without considering a quantity of relay nodes.

When the only valid UWB positioning request cannot be determined based on time of arrival of the UWB positioning request or based on the propagation distance of the UWB positioning request, for example, more than two UWB positioning requests satisfy the preset standard, the only valid UWB positioning request may be further determined based on a quantity of intermediate nodes that the UWB positioning request passes through.

A standard for selecting the valid UWB location request may be flexibly set based on different situation of the scenario and the device. For example, in a scenario in which more attention is paid to communication time, the UWB request that first arrives may be selected as the valid UWB request. If more attention is paid to an actual communication distance, the UWB positioning request corresponding to a shortest propagation distance after calculation may be selected as the valid positioning request.

When the destination device D cannot determine the only UWB positioning request based on the quantity of relay nodes, the sequence of the time of arrival, and the propagation distance, the destination device D may randomly select one of the UWB positioning requests as the valid UWB positioning request.

In step S605, the destination device D determines, based on the determined valid UWB positioning request, a positioning path that connects the originating device and the destination device and passes through at least one relay device, generates a UWB positioning response, and sends the positioning response to the relay device, closest to the destination device, in the relay device on the determined positioning path, where the UWB positioning response indicates the positioning path.

In the scenario shown in FIG. 5(a), the destination device D may determine, based on the UWB positioning request forwarded by the relay device B2 to the destination device D, that a propagation path of the selected UWB positioning request is A-B2-D. The destination device D generates a response message for the UWB positioning request, which is referred to as a UWB positioning response. A format of the UWB positioning response message is basically the same as that shown in Table 1. In a path field of the UWB positioning response message, the path is D-B2-A, which is a reverse path of the path of the UWB positioning request. Based on the path D-B2-A for returning, the UWB positioning response is transmitted from the destination device D back to the originating device A.

In step S606, the relay device on the determined positioning path is configured to relay, from the destination device to the originating device A, the UWB positioning response generated by the destination device D. Based on the path D-B2-A, the UWB positioning response generated by the destination device D is forwarded by the relay device B2 to the originating device A.

The UWB positioning response is returned along the original path determined by the destination device, so that the positioning response corresponding to the positioning request is returned to the originating device along a path with optimal communication efficiency.

In step S607, the originating device A receives the UWB positioning response, and determines a position of the destination device D relative to the originating device A based on the UWB positioning response.

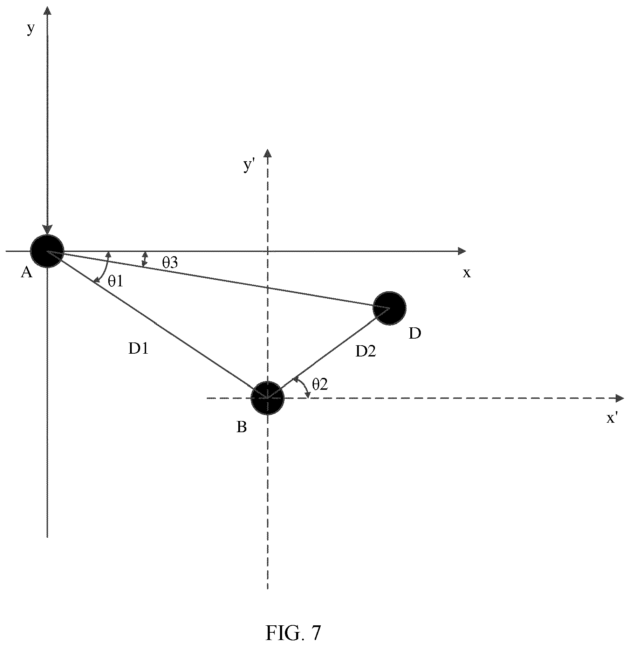

The following explains an example process in which the originating device A determines positioning of the destination device D relative to the originating device A based on the UWB positioning response, by taking the positioning response returned from the destination device D through the path D-B2-A as an example. FIG. 7 is a principle diagram of calculating positioning of the destination device D by the originating device A. To calculate positioning of the device D relative to the device A, it is assumed that the device A, the device B2, and the device D are all in the same plane.

First, a two-dimensional coordinate system is established for the device A and the device B2. In the coordinate system, point A corresponds to the device A, a position of point A is used as an origin of the coordinate system, and point B corresponds to the device B2. According to a feature of the UWB communication technology, the device A and the device B2 may determine a distance and relative angle between the two UWB devices based on ToF and AoA. As shown in FIG. 7, a distance between A and B is D1, and an included angle θ1 between a connection line between A and B and an X axis of the coordinate system is used as an included angle between A and B, that is, the relative angle between the device A and the device B2. As shown in FIG. 7, θ1 is located in the fourth quadrant of the coordinate system. Therefore, sinθ1 is a negative value, and cosθ1 is a positive value. Coordinates of point B relative to the origin A (0, 0) are (D1cosθ1, D1sinθ1).

After coordinates of the device B2 relative to the device A, that is, the coordinates of point B, are determined, coordinates of the device D relative to the device B2, that is, coordinates of D relative to B, are further determined. In this case, a new coordinate system needs to be established by using point B as an origin, for example, a coordinate system drawn by using a dashed line in FIG. 7, where point D corresponds to the device D. The new coordinate system with point B as the origin is actually obtained by translating the coordinate system established with point A as the origin, and X axes and Y axes of the two coordinate systems are parallel. A distance between B and D is D2, and an included angle θ2 between a connection line between B and D and an X' axis of the coordinate system is used as an included angle between B and D, that is, a relative angle between the device B and the device D. As shown in FIG. 7, θ2 is located in the first quadrant of the coordinate system. Therefore, sinθ1 is a positive value, and cosθ1 is a positive value. Coordinates of point D relative to the origin B (0, 0) are (D2cosθ2, D2sinθ2).

Finally, based on the coordinates of D relative to B and the coordinates of B relative to A, it may be obtained through conversion that, in the coordinate system with A as the origin, coordinates of A are (0, 0), and the coordinates of D are (D1cosθ1+D2cosθ2, D1sinθ1+D2sinθ2).

When the coordinates of point A and the coordinates of point D are both determined, a straight-line distance D3 between A and D is [(D1cosθ1+D2cosθ2)²+(D1sinθ1+D2sinθ2)2]^{1/2}. An included angle between A and D is θ3=arcsin((D1sinθ1+D2sinθ2)/D3).

In the implementations of this application, the foregoing method for calculating the coordinates of D relative to A is merely an example for description. This application is not limited thereto, and another calculation method based on a trigonometric function may be used.

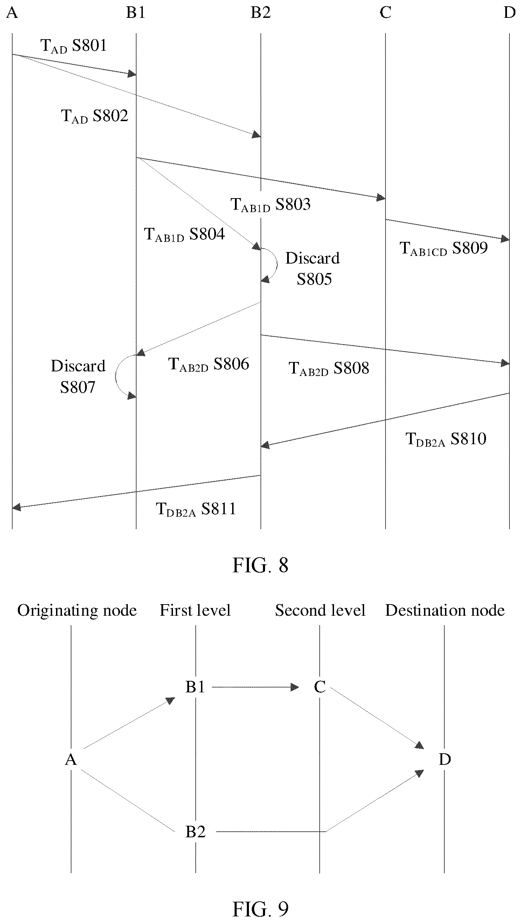

The following further describes the process of the UWB-technology-based positioning method with reference to FIG. 8. FIG. 8 shows a process of forwarding the UWB request from the originating device to the destination device and a process of forwarding the UWB positioning response message from the destination device to the originating device in the scenario shown in FIG. 5(a).

The originating device A first generates a UWB message, where the message is used as a UWB positioning request for requesting for a position of the device D. The message is recorded as T_{AD}, indicating that an originating device of the message is A and a destination device to be positioned is D. As shown in FIG. 5(b), UWB devices that can be discovered within a communication coverage of the originating device A are the relay device B1 and the relay device B2. The originating device A separately sends the positioning request message T_{AD} to the relay device B1 (S801) and the relay device B2 (S802) in a broadcast manner.

After receiving the UWB positioning request from the originating device A, the relay device B1 forwards the received message to a UWB device that can be discovered by the relay device B1. As shown in FIG. 5(c), UWB devices that can be discovered within a communication coverage of the relay device B1 are respectively the device A, the device B2, and the device C. The UWB message forwarded by the relay device B1 is separately sent to the device B2 and the device C (S804 and S803).

After receiving the UWB request, the device B1 adds an identifier about the device B1 to the UWB request, and then forwards the UWB request to the device B2 (S803), so that a device that subsequently receives the request may determine that the UWB request is forwarded by the device B1. A process in which the device B1 adds the device identifier to the UWB positioning request is the same as that described above, and is not repeated herein. The UWB positioning request T_{AD} is represented as T_{AB1D} after being forwarded by the device B1. The device B1 sends the message T_{AB1D} to the device C (S803) and the device B2 (S804).

Because the relay device B2 is within the communication coverages of the device A and the device B1, the device B2 may receive both the UWB positioning request T_{AD} sent by the device A and the UWB positioning request T_{AB1D} forwarded by the device B1. After receiving the positioning requests T_{AD} and T_{AB1D}, the relay device B2 may determine, by parsing path information in the messages, that the two positioning requests are both sent by the device A and are used for positioning the destination device D. In addition, it can be learned by comparing the message T_{AD} with the message T_{AB1D} that the quantity of intermediate nodes included in a transmission path of the message T_{AD} is 0, and the quantity of intermediate nodes included in a transmission path of the message T_{AB1D} is 1. A larger quantity of intermediate nodes included in the transmission path indicates a larger quantity of times that the message is forwarded. Based on a comparison result, the device B2 discards the message T_{AB1D} that is forwarded for a relatively large quantity of times (S805), and forwards, to a next node, the message T_{AD} that is forwarded for a smallest quantity of times (S806 and S808).

The device B2 generates a to-be-forwarded UWB positioning message T_{AB2D} based on the message T_{AD}. As shown in FIG. 5(d), devices that can be discovered by the device B2 include the device A, the device B1, and the device D. Because the device B1 is within a communication coverage of the device B2, the message T_{AB2D} is also sent to B1 (S806). In this way, the device B1 also receives both the message T_{AD} from the device A and the message T_{AB2D} from the device B2. Based on the same mechanism as that mentioned in the foregoing description of the device B2, the device B1 discards the message T_{AB1D} that is forwarded for a relatively large quantity of times (S807), and forwards, to a next node, the message T_{AD} that is forwarded for the smallest quantity of times. Based on the message T_{AD}, it can be identified that the message is from the device A. Therefore, the device B2 does not send T_{AB1D} back to the device A.

The message T_{AB2D} forwarded by the device B2 is sent to the device D (S808). After receiving the message T_{AB2D}, the device D learns, by parsing the message, that the message is a positioning request initiated by the device A to search for the device D.

On the other hand, for the device C, because the device C is also within the communication coverage of the device B1, after the device B2 sends the message T_{AB1D} to the device C (S803), the device C adds a device identifier of the device C to the message based on the message T_{AB1D}, and generates a to-be-forwarded UWB positioning message T_{AB1CD}. As shown in FIG. 5(c), the device C may discover only the device D in addition to the device B1. Therefore, the device C sends the message T_{AB1CD} to the device D (S809). Based on the message T_{AB1D}, it can be identified that T_{AB1CD} is from the device B1. Therefore, the device C does not send T_{AB1CD} back to the device B1.

The device D receives UWB positioning requests forwarded through two paths, one of which is T_{AB1CD} forwarded through A-B1-C, and the other is T_{AB2D} forwarded through A-B2. According to the foregoing principle, the device D selects one of the UWB positioning requests as a valid UWB positioning request, and generates a UWB positioning response message for the valid UWB positioning request. For example, it can be learned by comparing the message T_{AB2D} with the message T_{AB1CD} that the quantity of intermediate nodes included in the transmission path of the message T_{AB2D} is 1, and the quantity of intermediate nodes included in the transmission path of the message T_{AB1CD} is 2. A larger quantity of intermediate nodes included in the transmission path indicates a larger quantity of times that the message is forwarded. The device D selects the message that passes through a small quantity of intermediate nodes as the valid UWB positioning request, namely selects T_{AB2D}.

As shown in FIG. 8, when it is determined that T_{AB2D} is the valid UWB positioning request, the device D generates a UWB positioning response message T_{DB2A}. The message T_{DB2A} indicates that the message is sent from the device D and forwarded by the device B2 to the device A.

The message T_{DB2A} is forwarded from the device D to the device B2 (S810). The device B2 then forwards the message T_{DB2A} to the device A (S811). After receiving the message T_{DB2A}, the device A positions the device D based on the message T_{DB2A}. A principle and process of positioning the device D by the device A based on the UWB positioning response message are described above, and are not repeated herein.

According to some implementations of this application, in an implementation process of the UWB-technology-based positioning method, to suppress waste of system resources caused by unlimited forwarding of messages, a mechanism of suppressing a quantity of messages may be added in the implementation process of the positioning method. FIG. 9 shows a quantity of levels at which a UWB positioning request is forwarded in an example scenario. In the scenario shown in FIG. 5(a) and the message forwarding process explained in FIG. 8, the message initiated by the device A is forwarded at a plurality of levels, namely is forwarded for a plurality of times. As shown in FIG. 9, forwarding by the device B1 and the device B2 may be of a first level, and forwarding by the device C is of a second level. As explained above, a path field is reserved in a message transmitted between devices as a UWB positioning request, and the quantity of times that the message is forwarded and the name of a relay device that the message passes through may be automatically determined based on the path. Accordingly, the forwarding level shown in FIG. 9 may be determined. In processes in which the relay device determines a forwarding object and the device D determines the finally used positioning request, determining may be performed based on the quantity of message forwarding nodes. In some embodiments of this application, in the implementation process of the UWB-technology-based positioning method, it is not expected that the UWB positioning request is forwarded excessively in a system. Therefore, an upper limit, for example, 4, may be set for the quantity of forwarding times in the communication system. When any relay device finds in a received message that a quantity of relay nodes included in a path is equal to 4, the relay device skips forwarding the message.

In addition, according to some implementations of this application, to prevent UWB positioning from being frequently initiated to save communication resources of the system, the system may set a limit. If any UWB device serving as an originating device does not receive any response within a first time threshold after sending a UWB positioning request, for example, 60 seconds, the UWB device is limited to frequently send the UWB positioning request again. The device is allowed to initiate the UWB positioning request for the second time only after a second time threshold, for example, 120 seconds. In addition, the second time threshold may be in direct proportion to the first time threshold, and a ratio of the two time thresholds may be a quantity of times that the UWB positioning request is continuously initiated. For example, after the device A initiates the UWB positioning request for the first time, if no response is received within 60 seconds, it is determined that positioning fails. The system allows, 120 seconds after determining that positioning fails, the device A to initiate the UWB positioning request for the second time. If the UWB positioning request initiated for the second time still fails, the system allows, 180 seconds after determining that positioning fails, the device A to initiate the UWB positioning request for the third time.

There are some security considerations in a process of implementing positioning based on the UWB technology. For example, the communication system may be attacked, and an incorrect message may be maliciously inserted, to interfere with a positioning result.

According to some implementations of this application, in the foregoing scenario in which the user searches for the vehicle (the destination UWB device) by using the mobile phone (the originating UWB device), a shared key Ks may be preset for the mobile phone and the UWB device on the vehicle. When the mobile phone sends a UWB positioning request for searching for the vehicle, the shared key Ks is used.

According to some implementations of this application, a security mechanism may be set in the UWB-technology-based positioning process, so as to avoid a malicious attack in a process of implementing UWB positioning. For various types of UWB devices used in embodiments of this application, for example, a mobile phone and a UWB tag, this positioning method may be performed only between UWB devices manufactured by a specific manufacturer

(for example, a same device manufacturer or software manufacturer, or a plurality of hardware/software manufacturers that are compatible with each other based on a same standard scope). The manufacturer writes a unique key (hereinafter referred to as Kt for short) into firmware of the UWB device, and when transmitting a message, the UWB device encrypts some or all fields of the message by using the key, for example, encrypts a device name of an originating device. The Cypher field in the example data structure of the UWB message shown in Table 1 includes necessary information for ensuring communication security. The encrypted field is written into the Cypher field. After receiving the UWB positioning request, the UWB device on the vehicle decrypts encrypted information in the Cypher field by using the key Ks, to determine authenticity of a source of the positioning request.

In some implementations, when performing security confirmation, the destination UWB device further confirms a timestamp (timestamp) of the received positioning request message. For example, in some cases, the timestamp of the positioning request message may be used as a standard to determine whether the message is repeatedly received. If it is found that a timestamp of a newly received positioning request message is the same as a timestamp of a processed positioning request message, it may be determined that the message is received repeatedly, and the message may be discarded. In some other cases, it may be determined, based on the timestamp of the positioning request message, whether a time length between generation time of the positioning request message and current time when the message is received exceeds a specific time length, for example, 15 minutes. If the time length is exceeded, the message is too outdated and may have been tampered with, which affects security. For an outdated positioning request message, the destination UWB device may discard the message to ensure communication security.

In addition, in some application scenarios, if there are too many UWB devices of different types and brands, messages are flooded, causing some interference to communication.

According to some implementations of this application, a security mechanism may be set in the UWB-technology-based positioning process, so as to prevent a message sent by an unauthorized UWB device from being mixed into the communication system. In a UWB message transmitted between UWB devices, for example, the example data structure shown in Table 1, a payload used as an instance of content of the UWB message is a plaintext message. Each UWB device may encrypt the plaintext message by using the key Kt, for example, perform hash (hash) calculation to obtain a verification value, that is, a MAC value. The MAC value may be included in the cypher (cypher) field. For example, B1 serving as a relay device performs hash calculation on the plaintext message of the payload by using the key Kt, to obtain MAC (B1). When the device B1 forwards the message to the device C, for the received message, the device C also performs hash calculation on the payload in the message by using the key Kt that the device C has, to obtain a corresponding MAC value. If the calculated MAC value is consistent with the MAC value in the received message, the device C confirms that the message is correct. If the calculated MAC value is not consistent with the MAC value in the received message, the device C discards the received message. By such a setting, during implementation of the UWB positioning method according to this application, a message sent by another unauthorized device can be prevented from being mixed into the communication system to cause message flooding and affect communication efficiency.

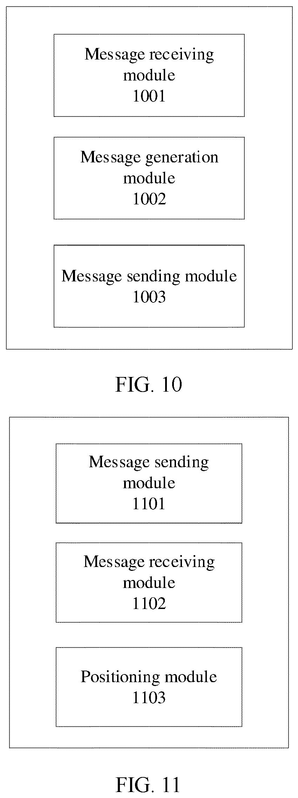

The following describes, with reference to FIG. 10 to FIG. 12, an ultra wide band (UWB) device provided according to embodiments of this application.

As shown in FIG. 10, an embodiment of this application provides a relay device supporting ultra wide band positioning. The relay device includes a message receiving module 1001, a message generation module 1002, and a message sending module 1003.

The message receiving module 1001 receives at least one UWB positioning request. The at least one UWB positioning request includes a first UWB positioning request from an originating device of a UWB positioning request, and/or a second UWB positioning request forwarded by another relay device. The UWB positioning request indicates a request of the originating device for searching for a destination device.

The message generation module 1002 selects one UWB positioning request from the at least one UWB positioning request, and generates a second UWB positioning request of a first relay device based on the selected UWB positioning request. The second UWB positioning request of the first relay device further includes a device identifier of the first relay device.

The message sending module 1003 sends the second UWB positioning request of the first relay device.

As shown in FIG. 11, an embodiment of this application provides an originating device supporting ultra wide band positioning. The originating device includes a message sending module 1101, a message receiving module 1102, and a positioning module 1103.

The message sending module 1101 sends a UWB positioning request. The UWB positioning request indicates a request of the originating device for searching for a destination device.

The message receiving module 1102 receives a UWB positioning response. The UWB positioning response indicates a positioning path that is determined by the destination device and connects the originating device and the destination device. The positioning path includes a device identifier of at least one relay device. The at least one device is configured to relay, from the originating device to the destination device, the request of the originating device for searching for the destination device.

The positioning module 1103 determines a position of the destination device relative to the originating device based on the UWB positioning response.

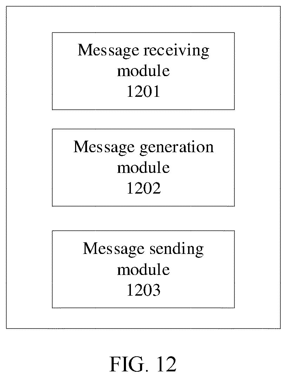

As shown in FIG. 12, an embodiment of this application provides a destination device supporting ultra wide band positioning. The destination device includes a message receiving module 1201, a message generation module 1202, and a message sending module 1203.

The message receiving module 1201 receives at least one UWB positioning request. Each UWB positioning request in the at least one positioning request indicates request information of an originating device for searching for the destination device. Each of the at least one UWB positioning request includes a device identifier of a relay device that the UWB positioning request passes through.

The message generation module 1202 determines, based on the device identifier of the relay device included in each UWB positioning request, a quantity of relay devices that each UWB positioning request passes through, and select, at least partially based on the quantity of relay devices included in each UWB positioning request, one UWB positioning request from the at least one UWB positioning request as a valid UWB positioning request. The relay device is configured to relay, to the destination device, the request information of the originating device for searching for the destination device. The message generation module 1202 is further configured to determine, based on the valid UWB positioning request, a positioning path that connects the originating device and the destination device, and generates a UWB positioning response.

The message sending module 1203 sends the UWB positioning response. The UWB positioning response indicates the positioning path.

It is to be noted that, in this specification, "A and/or B" indicates that there may be three cases: only A exists, only B exists, and both A and B exist.

All method implementations of this application may be implemented by software, a magnetic component, firmware, or the like.

Program code may be used to input instructions, to perform functions described in this specification and generate output information. The output information may be applied to one or more output devices in a known manner. For a purpose of this application, a processing system includes any system with a processor such as a digital signal processor (DSP), a microcontroller, an application-specific integrated circuit (ASIC), or a microprocessor.

The program code may be implemented in a high-level procedural language or an object-oriented programming language, to communicate with the processing system. The program code may alternatively be implemented by using an assembly language or a machine language when needed. Actually, the mechanism described in this specification is not limited to a scope of any particular programming language. In any case, the language may be a compiled language or an interpretive language.

One or more aspects of at least one embodiment may be implemented by using representative instructions stored on a computer-readable storage medium. The instructions represent various logic in a processor, and when the instructions are read by a machine, the machine acts on the logic for performing the technologies described in this specification. These representations, referred to as "IP core (IP Core)", may be stored on a physical computer-readable storage medium and provided to a plurality of customers or production facilities to load into a manufacturing machine that actually manufactures the logic or processor.

In some cases, an instruction converter may be configured to convert instructions from a source instruction set to a target instruction set. For example, the instruction converter may convert, in a transform (for example, static binary transform, or dynamic binary transform including dynamic compilation), morphing, emulation, or another manner, the instructions into one or more other instructions processed by the IP core. The instruction converter may be implemented by software, hardware, firmware, or a combination thereof. The instruction converter may be located on the processor, outside the processor, or partially on the processor and partially outside the processor.

## Claims

1. An ultra wide band, UWB, positioning method for a first relay device, comprising:
receiving (S601) at least one UWB positioning request, wherein the at least one UWB positioning request comprises a first UWB positioning request from an originating device of a UWB positioning request, and/or a second UWB positioning request forwarded by another relay device, and the UWB positioning request indicates a request of the originating device for searching for a destination device;
selecting one UWB positioning request from the at least one UWB positioning request, and generating a second UWB positioning request of the first relay device based on the selected UWB positioning request, wherein the second UWB positioning request of the first relay device further comprises a device identifier of the first relay device; and
sending (S602) the second UWB positioning request of the first relay device;
wherein the method further comprises:
verifying content of each UWB positioning request based on a second key shared by the originating device, the relay devices and the destination device.

2. The method according to claim 1, wherein when the at least one UWB positioning request comprises a plurality of UWB positioning requests, the selecting one UWB positioning request from the at least one UWB positioning request further comprises:
determining, based on a device identifier of a relay device comprised in each of the at least one UWB positioning request, a quantity of relay devices that each UWB positioning request passes through, and selecting one UWB positioning request at least partially based on the quantity.

3. The method according to claim 2, wherein the selecting one UWB positioning request at least partially based on the quantity comprises:
forwarding, to the destination device and/or the another relay device, a UWB positioning request that corresponds to a smallest quantity.

4. The method according to claim 2, wherein the selecting one UWB positioning request at least partially based on the quantity comprises:
forwarding, to the destination device and/or the another relay device, a UWB positioning request that corresponds to a smallest quantity and first arrives.

5. The method according to claim 1, wherein the verifying content of each UWB positioning request comprises:
calculating a hash value of plaintext content of each UWB positioning request by using the key;
comparing the hash value with a content venfication field in each UWB positioning request, wherein the content verification field is a hash value, calculated by a sending device of each UWB positioning request by using the key, of the plaintext content of the UWB positioning request; and
when the hash value is consistent with the content verification field, determining that the UWB positioning request is valid, or when the hash value is inconsistent with the content verification field, determining that the UWB positioning request is invalid.

6. The method according to any one of claims 1 to 5, further comprising:
receiving (S606) a first UWB positioning response from the destination device or another relay device, wherein the first UWB positioning response indicates a positioning path that is determined by the destination device and connects the destination device and the originating device;
generating a second UWB positioning response based on the first UWB positioning response, wherein the second UWB positioning response indicates the positioning path, and comprises the device identifier of the first relay device; and
sending (S607) the second UWB positioning response to the originating device or another relay device on the positioning path.

7. An ultra wide band, UWB, positioning method for an originating device, comprising:
sending (S601) a UWB positioning request, wherein the UWB positioning request indicates a request of the originating device for searching for a destination device;
receiving (S607) a UWB positioning response, wherein the UWB positioning response indicates a positioning path that is determined by the destination device and connects the originating device and the destination device, the positioning path comprises a device identifier of at least one relay device, and the at least one relay device is configured to relay, from the originating device to the destination device, the request of the originating device for searching for the destination device; and
determining (S607) a position of the destination device relative to the originating device based on the UWB positioning response;
wherein the originating device and the destination device share a first key; and
the originating device adds an identity verification field encrypted by using the first key to the sent UWB positioning request and/or the originating device decrypts an identity verification field in the received UWB positioning response by using the first key to confirm an identity of the destination device.

8. An ultra wide band, UWB, positioning method for a destination device, comprising:
receiving (S603) at least one UWB positioning request, wherein each UWB positioning request in the at least one positioning request indicates request information of an originating device for searching for the destination device, and each of the at least one UWB positioning request comprises a device identifier of a relay device that the UWB positioning request passes through;
determining (S604), based on the device identifier of the relay device comprised in each UWB positioning request, a quantity of relay devices that each UWB positioning request passes through, and selecting (S604), at least partially based on a quantity of relay devices comprised in each UWB positioning request, one UWB positioning request from the at least one UWB positioning request as a valid UWB positioning request, wherein the relay device is configured to relay, to the destination device, the request information of the originating device for searching for the destination device;
determining (S605), based on the valid UWB positioning request, a positioning path that connects the originating device and the destination device; and
generating and sending (S605) a UWB positioning response, wherein the UWB positioning response indicates the positioning path;
wherein the method further comprises: verifying each UWB positioning request based on a first key shared by the destination device and the originating device, to determine validity of each UWB positioning request.

9. The method according to claim 8, wherein the selecting (S604), at least partially based on a quantity of relay devices comprised in each UWB positioning request, one UWB positioning request from the at least one UWB positioning request as a valid UWB positioning request comprises:
selecting a UWB positioning request that corresponds to a smallest quantity as the valid UWB positioning request.

10. The method according to claim 8, wherein the selecting (S604), at least partially based on a quantity of relay devices comprised in each UWB positioning request, one UWB positioning request from the at least one UWB positioning request as a valid UWB positioning request comprises:
selecting a UWB positioning request that corresponds to a smallest quantity and first arrives as the valid UWB positioning request.

11. The method according to claim 10, wherein the sending (S605) the UWB positioning response comprises:
sending the UWB positioning response to a relay device, closest to the destination device, in a relay device on the positioning path.

12. A machine-readable storage medium, wherein the machine-readable storage medium stores program code, and when the program code is executed on a machine, the machine is enabled to perform the ultra wide band positioning method according to any one of claims 1 to 11.

13. An ultra wide band device (100), comprising a processor (110) and a storage medium (121), wherein
the storage medium (121) is coupled to the processor (110), the storage medium (121) is configured to store program code, and when the processor (110) reads the program code from the storage medium (121), the ultra wide band device (100) is enabled to perform the ultra wide band positioning method according to any one of claims 1 to 11.

## Patentansprüche

1. Ultrabreitband, UWB ("Ultra Wide Band"), -Positionsbestimmungsverfahren für eine erste Relaisvorrichtung, umfassend:
Empfangen (S601) wenigstens einer UWB-Positionsbestimmungsanforderung, wobei die wenigstens eine UWB-Positionsbestimmungsanforderung eine erste UWB-Positionsbestimmungsanforderung von einer Ursprungsvorrichtung einer UWB-Positionsbestimmungsanforderung und/oder eine zweite UWB-Positionsbestimmungsanforderung, die von einer anderen Relaisvorrichtung weitergeleitet wird, umfasst, und die UWB-Positionsbestimmungsanforderung eine Anforderung der Ursprungsvorrichtung zum Suchen nach einer Zielvorrichtung anzeigt;
Auswählen einer UWB-Positionsbestimmungsanforderung aus der wenigstens einen UWB-Positionsbestimmungsanforderung und Erzeugen einer zweiten UWB-Positionsbestimmungsanforderung der ersten Relaisvorrichtung basierend auf der ausgewählten UWB-Positionsbestimmungsanforderung, wobei die zweite UWB-Positionsbestimmungsanforderung der ersten Relaisvorrichtung ferner eine Vorrichtungskennung der ersten Relaisvorrichtung umfasst; und
Senden (S602) der zweiten UWB-Positionsbestimmungsanforderung der ersten Relaisvorrichtung;
wobei das Verfahren ferner umfasst:
Verifizieren des Inhalts jeder UWB-Positionsbestimmungsanforderung basierend auf einem zweiten Schlüssel, der von der Ursprungsvorrichtung, der Relaisvorrichtung und der Zielvorrichtung gemeinsam verwendet wird.

2. Verfahren gemäß Anspruch 1, wobei, wenn die wenigstens eine UWB-Positionsbestimmungsanforderung mehrere UWB-Positionsbestimmungsanforderungen umfasst, das Auswählen einer UWB-Positionsbestimmungsanforderung aus der wenigstens einen UWB-Positionsbestimmungsanforderung ferner umfasst:
Bestimmen, basierend auf einer Vorrichtungskennung einer Relaisvorrichtung, die in jeder der wenigstens einen UWB-Positionsbestimmungsanforderung enthalten ist, einer Anzahl von Relaisvorrichtungen, die jede UWB-Positionsbestimmungsanforderung durchläuft, und Auswählen einer UWB-Positionsbestimmungsanforderung wenigstens teilweise basierend auf der Anzahl.

3. Verfahren gemäß Anspruch 2, wobei das Auswählen einer UWB-Positionsbestimmungsanforderung wenigstens teilweise basierend auf der Anzahl umfasst:
Weiterleiten, an die Zielvorrichtung und/oder die andere Relaisvorrichtung, einer UWB-Positionsbestimmungsanforderung, die einer kleinsten Anzahl entspricht.

4. Verfahren gemäß Anspruch 2, wobei das Auswählen einer UWB-Positionsbestimmungsanforderung wenigstens teilweise basierend auf der Anzahl umfasst:
Weiterleiten, an die Zielvorrichtung und/oder die andere Relaisvorrichtung, einer UWB-Positionsbestimmungsanforderung, die einer kleinsten Anzahl entspricht und zuerst ankommt.

5. Verfahren gemäß Anspruch 1, wobei das Verifizieren des Inhalts jeder UWB-Positionsbestimmungsanforderung umfasst:
Berechnen eines Hashwerts des Klartextinhalts jeder UWB-Positionsbestimmungsanforderung unter Verwendung des Schlüssels;
Vergleichen des Hashwerts mit einem Inhaltsverifizierungsfeld in jeder UWB-Positionsbestimmungsanforderung, wobei das Inhaltsverifizierungsfeld ein Hashwert, der von einer Sendevorrichtung jeder UWB-Positionsbestimmungsanforderung unter Verwendung des Schlüssels berechnet wird, des Klartextinhalts der UWB-Positionsbestimmungsanforderung ist; und
wenn der Hashwert mit dem Inhaltsverifizierungsfeld übereinstimmt, Bestimmen, dass die UWB-Positionsbestimmungsanforderung gültig ist, oder, wenn der Hashwert mit dem Inhaltsverifizierungsfeld nicht übereinstimmt, Bestimmen, dass die UWB-Positionsbestimmungsanforderung ungültig ist.

6. Verfahren gemäß einem der Ansprüche 1 bis 5, ferner umfassend:
Empfangen (S606) einer ersten UWB-Positionsbestimmungsantwort von der Zielvorrichtung oder einer anderen Relaisvorrichtung, wobei die erste UWB-Positionsbestimmungsantwort einen Positionsbestimmungspfad angibt, der von der Zielvorrichtung bestimmt wird und die Zielvorrichtung und die Ursprungsvorrichtung verbindet;
Erzeugen einer zweiten UWB-Positionsbestimmungsantwort basierend auf der ersten UWB-Positionsbestimmungsantwort, wobei die zweite UWB-Positionsbestimmungsantwort den Positionsbestimmungspfad angibt und die Vorrichtungskennung der ersten Relaisvorrichtung umfasst; und
Senden (S607) der zweiten UWB-Positionsbestimmungsantwort an die Ursprungsvorrichtung oder eine andere Relaisvorrichtung auf dem Positionsbestimmungspfad.

7. Ultrabreitband, UWB ("Ultra Wide Band"), -Positionsbestimmungsverfahren für eine Ursprungsvorrichtung, umfassend:
Senden (S601) einer UWB-Positionsbestimmungsanforderung, wobei die UWB-Positionsbestimmungsanforderung eine Anforderung der Ursprungsvorrichtung zum Suchen nach einer Zielvorrichtung anzeigt;
Empfangen (S607) einer UWB-Positionsbestimmungsantwort, wobei die UWB-Positionsbestimmungsantwort einen Positionsbestimmungspfad angibt, der von der Zielvorrichtung bestimmt wird und die Ursprungsvorrichtung und die Zielvorrichtung verbindet, wobei der Positionsbestimmungspfad eine Vorrichtungskennung wenigstens einer Relaisvorrichtung umfasst und die wenigstens eine Relaisvorrichtung dafür ausgelegt ist, die Anforderung der Ursprungsvorrichtung zum Suchen der Zielvorrichtung von der Ursprungsvorrichtung an die Zielvorrichtung weiterzuleiten; und
Bestimmen (S607) einer Position der Zielvorrichtung relativ zur Ursprungsvorrichtung basierend auf der UWB-Positionsbestimmungsantwort; wobei die Ursprungsvorrichtung und die Zielvorrichtung einen ersten Schlüssel gemeinsam verwenden; und
die Ursprungsvorrichtung der gesendeten UWB-Positionsbestimmungsanforderung ein Identitätsverifizierungsfeld hinzufügt, das unter Verwendung des ersten Schlüssels verschlüsselt wurde, und/oder die Ursprungsvorrichtung ein Identitätsverifizierungsfeld in der empfangenen UWB-Positionsbestimmungsantwort unter Verwendung des ersten Schlüssels entschlüsselt, um eine Identität der Zielvorrichtung zu bestätigen.

8. Ultrabreitband, UWB ("Ultra Wide Band"), -Positionsbestimmungsverfahren für eine Zielvorrichtung, umfassend:
Empfangen (S603) wenigstens einer UWB-Positionsbestimmungsanforderung, wobei jede UWB-Positionsbestimmungsanforderung der wenigstens einen Positionsbestimmungsanforderung Anforderungsinformationen einer Ursprungsvorrichtung zum Suchen nach der Zielvorrichtung anzeigt und jede der wenigstens einen UWB-Positionsbestimmungsanforderung eine Vorrichtungskennung einer Relaisvorrichtung umfasst, die die UWB-Positionsbestimmungsanforderung durchläuft;
Bestimmen (S604), basierend auf der Vorrichtungskennung der Relaisvorrichtung, die in jeder UWB-Positionsbestimmungsanforderung enthalten ist, einer Anzahl von Relaisvorrichtungen, die jede UWB-Positionsbestimmungsanforderung durchläuft, und Auswählen (S604), wenigstens teilweise basierend auf einer Anzahl von Relaisvorrichtungen, die in jeder UWB-Positionsbestimmungsanforderung enthalten sind, einer UWB-Positionsbestimmungsanforderung aus der wenigstens einen UWB-Positionsbestimmungsanforderung als eine gültige UWB-Positionsbestimmungsanforderung, wobei die Relaisvorrichtung dafür ausgelegt ist, die Anforderungsinformationen der Ursprungsvorrichtung zum Suchen nach der Zielvorrichtung an die Zielvorrichtung weiterzuleiten;
Bestimmen (S605), basierend auf der gültigen UWB-Positionsbestimmungsanforderung, eines Positionsbestimmungspfads, der die Ursprungsvorrichtung und die Zielvorrichtung verbindet; und
Erzeugen und Senden (S605) einer UWB-Positionsbestimmungsantwort, wobei die UWB-Positionsbestimmungsantwort den Positionsbestimmungspfad angibt;
wobei das Verfahren ferner umfasst:
Verifizieren jeder UWB-Positionsbestimmungsanforderung basierend auf einem ersten, von der Zielvorrichtung und der Ursprungsvorrichtung gemeinsam verwendeten Schlüssel, um die Gültigkeit jeder UWB-Positionsbestimmungsanforderung zu bestimmen.

9. Verfahren gemäß Anspruch 8, wobei das Auswählen (S604), wenigstens teilweise basierend auf einer Anzahl von Relaisvorrichtungen, die in jeder UWB-Positionsbestimmungsanforderung enthalten sind, einer UWB-Positionsbestimmungsanforderung aus der mindestens einen UWB-Positionsbestimmungsanforderung als eine gültige UWB-Positionsbestimmungsanforderung umfasst:
Auswählen einer UWB-Positionsbestimmungsanforderung, die einer kleinsten Anzahl entspricht, als die gültige UWB-Positionsbestimmungsanforderung.

10. Verfahren gemäß Anspruch 8, wobei das Auswählen (S604), wenigstens teilweise basierend auf einer Anzahl von Relaisvorrichtungen, die in jeder UWB-Positionsbestimmungsanforderung enthalten sind, einer UWB-Positionsbestimmungsanforderung aus der mindestens einen UWB-Positionsbestimmungsanforderung als eine gültige UWB-Positionsbestimmungsanforderung umfasst:
Auswählen einer UWB-Positionsbestimmungsanforderung, die einer kleinsten Anzahl entspricht und zuerst ankommt, als die gültige UWB-Positionsbestimmungsanforderung.

11. Verfahren gemäß Anspruch 10, wobei das Senden (S605) der UWB-Positionsbestimmungsantwort umfasst:
Senden der UWB-Positionsbestimmungsantwort an eine Relaisvorrichtung, die der Zielvorrichtung am nächsten ist, in einer Relaisvorrichtung auf dem Positionsbestimmungspfad.

12. Maschinenlesbares Speichermedium, wobei das maschinenlesbare Speichermedium Programmcode speichert, und wenn der Programmcode auf einer Maschine ausgeführt wird, die Maschine befähigt wird, das Ultrabreitband-Positionsbestimmungsverfahren gemäß einem der Ansprüche 1 bis 11 durchzuführen.

13. Ultrabreitbandvorrichtung (100), umfassend einen Prozessor (110) und ein Speichermedium (121), wobei
das Speichermedium (121) mit dem Prozessor (110) gekoppelt ist, das Speichermedium (121) dafür ausgelegt ist, Programmcode zu speichern, und wenn der Prozessor (110) den Programmcode aus dem Speichermedium (121) liest, die Ultrabreitbandvorrichtung (100) befähigt wird, das Ultrabreitband-Positionsbestimmungsverfahren gemäß einem der Ansprüche 1 bis 11 durchzuführen.

## Revendications

1. Procédé de positionnement à bande ultra-large, UWB, pour un premier dispositif de relais, comprenant :
la réception (S601) d'au moins une demande de positionnement UWB, dans lequel la ou les demandes de positionnement UWB comprennent une première demande de positionnement UWB provenant d'un dispositif d'origine d'une demande de positionnement UWB, et/ou une seconde demande de positionnement UWB transférée par un autre dispositif de relais, et la demande de positionnement UWB indique une demande du dispositif d'origine pour rechercher un dispositif de destination ;
la sélection d'une demande de positionnement UWB parmi la ou les demandes de positionnement UWB, et la génération d'une seconde demande de positionnement UWB du premier dispositif de relais sur la base de la demande de positionnement UWB sélectionnée, dans lequel la seconde demande de positionnement UWB du premier dispositif de relais comprend en outre un identifiant de dispositif du premier dispositif de relais ; et
l'envoi (S602) de la seconde demande de positionnement UWB du premier dispositif de relais ;
dans lequel le procédé comprend en outre :
la vérification du contenu de chaque demande de positionnement UWB sur la base d'une seconde clé partagée par le dispositif d'origine, les dispositifs de relais et le dispositif de destination.

2. Procédé selon la revendication 1, dans lequel lorsque la ou les demandes de positionnement UWB comprennent une pluralité de demandes de positionnement UWB, la sélection d'une demande de positionnement UWB parmi la ou les demandes de positionnement UWB comprend en outre :
la détermination, sur la base d'un identifiant de dispositif d'un dispositif de relais compris dans chacune de la ou des demandes de positionnement UWB, d'une quantité de dispositifs de relais à travers lesquels passe chaque demande de positionnement UWB, et la sélection d'une demande de positionnement UWB au moins en partie sur la base de la quantité.

3. Procédé selon la revendication 2, dans lequel la sélection d'une demande de positionnement UWB au moins en partie sur la base de la quantité comprend :
le transfert, au dispositif de destination et/ou à un autre dispositif de relais, d'une demande de positionnement UWB qui correspond à une quantité la plus faible.

4. Procédé selon la revendication 2, dans lequel la sélection d'une demande de positionnement UWB au moins en partie sur la base de la quantité comprend :
le transfert, au dispositif de destination et/ou à un autre dispositif de relais, d'une demande de positionnement UWB qui correspond à une quantité la plus faible et la première arrivée.

5. Procédé selon la revendication 1, dans lequel la vérification du contenu de chaque demande de positionnement UWB comprend :
le calcul d'une valeur de hachage d'un contenu en texte clair de chaque demande de positionnement UWB à l'aide de la clé ;
la comparaison de la valeur de hachage avec un champ de vérification de contenu dans chaque demande de positionnement UWB, dans lequel le champ de vérification de contenu est une valeur de hachage, calculée par un dispositif d'envoi de chaque demande de positionnement UWB à l'aide de la clé, du contenu en texte clair de la demande de positionnement UWB ; et
lorsque la valeur de hachage est cohérente avec le champ de vérification de contenu, la détermination que la demande de positionnement UWB est valide, ou lorsque la valeur de hachage est incohérente avec le champ de vérification de contenu, la détermination que la demande de positionnement UWB est invalide.

6. Procédé selon l'une quelconque des revendications 1 à 5, comprenant en outre :
la réception (S606) d'une première réponse de positionnement UWB depuis le dispositif de destination ou un autre dispositif de relais, dans lequel la première réponse de positionnement UWB indique un trajet de positionnement qui est déterminé par le dispositif de destination et connecte le dispositif de destination et le dispositif d'origine ;
la génération d'une seconde réponse de positionnement UWB sur la base de la première réponse de positionnement UWB, dans lequel la seconde réponse de positionnement UWB indique le trajet de positionnement, et comprend l'identifiant de dispositif du premier dispositif de relais ; et
l'envoi (S607) de la seconde réponse de positionnement UWB au dispositif d'origine ou à un autre dispositif de relais sur le trajet de positionnement.

7. Procédé de positionnement à ultra-large bande, UWB, pour un dispositif d'origine, comprenant :
l'envoi (S601) d'une demande de positionnement UWB, dans lequel la demande de positionnement UWB indique une demande du dispositif d' origine pour rechercher un dispositif de destination ;
la réception (S607) d'une réponse de positionnement UWB, dans lequel la réponse de positionnement UWB indique un trajet de positionnement qui est déterminé par le dispositif de destination et connecte le dispositif d'origine et le dispositif de destination, le trajet de positionnement comprend un identifiant de dispositif d'au moins un dispositif de relais, et le ou les dispositifs de relais sont configurés pour relayer, depuis le dispositif d'origine jusqu'au dispositif de destination, la demande du dispositif d'origine pour rechercher le dispositif de destination ; et
la détermination (S607) d'une position du dispositif de destination par rapport au dispositif d' origine sur la base de la réponse de positionnement UWB ;
dans lequel
le dispositif d'origine et le dispositif de destination partagent une première clé ; et
le dispositif d'origine ajoute un champ de vérification d'identité chiffré à l'aide de la première clé à la demande de positionnement UWB envoyée et/ou le dispositif d'origine déchiffre un champ de vérification d'identité dans la réponse de positionnement UWB reçue à l'aide de la première clé pour confirmer une identité du dispositif de destination.

8. Procédé de positionnement à ultra-large bande, UWB, pour un dispositif de destination, comprenant :
la réception (S603) d'au moins une demande de positionnement UWB, dans lequel chaque demande de positionnement UWB parmi la ou les demandes de positionnement UWB indique des informations de demande d'un dispositif d'origine pour rechercher le dispositif de destination, et chacune de la ou des demandes de positionnement UWB comprend un identifiant de dispositif d'un dispositif de relais à travers lequel la demande de positionnement UWB passe ;
la détermination (S604), sur la base de l'identifiant de dispositif du dispositif de relais compris dans chaque demande de positionnement UWB, d'une quantité de dispositifs de relais à travers lesquels chaque demande de positionnement UWB passe, et la sélection (S604), au moins en partie sur la base d'une quantité de dispositifs de relais compris dans chaque demande de positionnement UWB, d'une demande de positionnement UWB provenant de la ou les demandes de positionnement UWB en tant que demande de positionnement UWB valide, dans lequel le dispositif de relais est configuré pour relayer, au dispositif de destination, les informations de demande du dispositif d'origine pour rechercher le dispositif de destination ;
la détermination (S605), sur la base de la demande de positionnement UWB valide, d'un trajet de positionnement qui connecte le dispositif d'origine et le dispositif de destination ; et
la génération et l'envoi (S605) d'une réponse de positionnement UWB, dans lequel la réponse de positionnement UWB indique le trajet de positionnement ;
dans lequel le procédé comprend en outre :
la vérification de chaque demande de positionnement UWB sur la base d'une première clé partagée par le dispositif de destination et le dispositif d'origine, pour déterminer la validité de chaque demande de positionnement UWB.

9. Procédé selon la revendication 8, dans lequel la sélection (S604), au moins en partie sur la base d'une quantité de dispositifs de relais compris dans chaque demande de positionnement UWB, d'une demande de positionnement UWB provenant de la ou les demandes de positionnement UWB en tant que demande de positionnement UWB valide comprend :
la sélection d'une demande de positionnement UWB qui correspond à une quantité la plus faible en tant que demande de positionnement UWB valide.

10. Procédé selon la revendication 8, dans lequel la sélection (S604), au moins en partie sur la base d'une quantité de dispositifs de relais compris dans chaque demande de positionnement UWB, d'une demande de positionnement UWB provenant de la ou les demandes de positionnement UWB en tant que demande de positionnement UWB valide comprend :
la sélection d'une demande de positionnement UWB qui correspond à une quantité la plus faible et la première arrivée en tant que demande de positionnement UWB valide.

11. Procédé selon la revendication 10, dans lequel l'envoi (S605) de la réponse de positionnement UWB comprend :
l'envoi de la réponse de positionnement UWB à un dispositif de relais, le plus proche du dispositif de destination, dans un dispositif de relais sur le trajet de positionnement.

12. Support de stockage lisible par machine, dans lequel le support de stockage lisible par machine stocke un code de programme, et lorsque le code de programme est exécuté sur une machine, la machine est activée pour exécuter le procédé de positionnement à ultra-large bande selon l'une quelconque des revendications 1 à 11.

13. Dispositif à ultra-large bande (100), comprenant un processeur (110) et un support de stockage (121), dans lequel
le support de stockage (121) est couplé au processeur (110), le support de stockage (121) est configuré pour stocker un code de programme, et lorsque le processeur (110) lit le code de programme à partir du support de stockage (121), le dispositif à ultra-large bande (100) est activé pour exécuter le procédé de positionnement à ultra-large bande selon l'une quelconque des revendications 1 à 11.
